# EUROPÄISCHE PATENTSCHRIFT

(11) **EP 4 200 354 B1**
(45) Veröffentlichungstag und Bekanntmachung des Hinweises auf die Patenterteilung: **02.10.2024**
(21) Anmeldenummer: 22700415.7
(22) Anmeldetag: 20.01.2022
(51) Int. Cl.: C08G 59/40, C08K 5/55, C08L 63/00

(54) **LAGERSTABILE EPOXIDHARZ-ZUSAMMENSETZUNG**
STORAGE-STABLE EPOXY RESIN COMPOSITION
COMPOSITION DE RÉSINE ÉPOXYDE STABLE AU STOCKAGE

(30) Priorität: 26.01.2021 DE 102021101685
(43) Veröffentlichungstag der Anmeldung: 28.06.2023
(73) Patentinhaber: Alzchem Trostberg GmbH, 83308 Trostberg (DE)
(72) Erfinder: ZGELA, Dominik, 83376 Truchtlaching (DE); DIJKINK, Peter, 84518 Garching (DE); RITZINGER, Florian, 84518 Garching (DE)
(74) Vertreter: Weickmann & Weickmann PartmbB
(86) Internationale Anmeldenummer: PCT/EP2022/051177
(87) Internationale Veröffentlichungsnummer: WO 2022/161837

(56) Entgegenhaltungen:
- EP-A1- 1 291 390
- EP-A1- 1 707 585
- JP-B2- 3 882 374

## Beschreibung

Die vorliegende Erfindung betrifft die Verwendung von Boronsäuren zur Erhöhung der Lagerstabilität von Epoxidharz-Zusammensetzungen sowie Epoxidharz-Zusammensetzungen umfassend ein Epoxidharz und einen Härter sowie eine Boronsäure.

Die Verwendung von Epoxidharzen ist aufgrund ihrer guten Chemikalienbeständigkeit, ihrer sehr guten thermischen und dynamisch-mechanischen Eigenschaften sowie ihres hohen elektrischen Isolationsvermögens weit verbreitet. Diese Epoxidharze liegen in flüssiger oder fester Form vor und können unter Zusatz von Härtern mit und ohne unter Wärmeeintrag gehärtet werden.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren, jedoch unter Erwärmung je nach Energieeintrag bereitwillig ausreagieren. Hierbei bedeutet "latent", dass eine Mischung der Einzelkomponenten unter definierten Lagerbedingungen stabil vorliegt.

Für solche einkomponentige Epoxidharz-Formulierungen ist beispielsweise Dicyandiamid ein besonders geeigneter und auch kostengünstiger Härter. Unter Umgebungsbedingungen können entsprechende Epoxidharz-Dicyandiamid-Mischungen bis zu zwölf (12) Monate gebrauchsfähig gelagert werden.

Um die Reaktionstemperatur für die Härtung von einkomponentigen Epoxidharz-Formulierungen, wie beispielsweise Epoxidharz-Dicyandiamid-Mischungen, herabzusetzen, wird diesen Formulierungen üblicherweise ein Härtungsbeschleuniger zugesetzt, der die Aktivierungsenergie für die Härtung herabsetzt, so dass eine Härtung bei niedrigeren Temperaturen möglich ist. Durch diese Härtungsbeschleuniger wird in vielen Fällen jedoch die Lagerstabilität von Epoxidharz-Zusammensetzung, die ein Epoxidharz, einen Härter und einen Härtungsbeschleuniger umfassen, herabgesetzt, so dass eine Lagerung bei Raumtemperatur über einen größeren Zeitraum nicht möglich ist. Um dennoch eine ausreichende Lagerstabilität von diesen einkomponentigen Epoxidharz-Formulierungen zu gewährleisten, müssen diese bei kontrollierten, niedrigen Temperaturen, oft bei -18 °C, gelagert werden. Ähnliche Lagerbedingungen müssen eingehalten werden, wenn weniger latente Härter eingesetzt in Epoxidharzen eingesetzt werden. Das führt zu erheblichen Zusatzkosten und großem Aufwand bei Lagerung, Transport und bei der Verarbeitung dieser Formulierung, insbesondere bei der Herstellung von Prepregs, Towpregs oder Klebstoffen.

In Kenntnis derartiger Hindernisse wurden bereits Vorschläge zu deren Überwindung veröffentlicht. So werden mit der europäischen Patentschrift EP 659793 B1 Gemische von Borsäure oder Boraten (Borsäureester) und Imidazol-Epoxidharz-Addukte als Härter für Epoxidharze beschrieben. Die somit erhaltenen Zusammensetzungen sind lagerstabil und ermöglichen eine schnelle Härtung durch Erhitzen.

Weiterhin werden mit der europäischen Patentschrift EP 2678369 B1 flüssige Härter beschrieben, die Cyanamid, mindestens ein Harnstoffderivat (Uron) und mindestens eine organische oder anorganische Säure als Stabilisator enthalten. Diese Härter lösen sich hervorragend in Epoxidharzen, weisen in den Epoxidharzen eine hohe Latenz auf und ermöglichen eine lange Lagerstabilität.

Zudem ist aus der europäischen Patentschrift EP 2780388 B1 bekannt, dass N,N'-Dimethylurone als alleinige Härter ohne den Zusatz eines Härtungsbeschleunigers Epoxidharze härten können.

Weiterhin wird mit der europäischen Patentanmeldung EP 3257884 A1 ein Epoxidharz-Gemisch aus Epoxidharz, Dicyandiamid, aromatischem Uron, und Borsäureester beschrieben. Die in den Beispielen aufgeführte Wirksamkeit der Borsäureester, speziell die Verlängerung der Zeit bis zum Peak in die Wärmestromkurve bei 60 °C, ist dermaßen gering, dass zu bezweifeln ist, ob durch Zugabe dieser Ester auf die Tiefkühl-Lagerung und den Tiefkühl-Transport verzichtet werden kann.

Zudem wird mit der deutschen Patentanmeldung DE 10 2019 121 195.6 eine Epoxidharz-Zusammensetzung beschrieben, die einen Härter, einen Härtungsbeschleuniger sowie eine Boronsäure zur Stabilisierung der Epoxidharz-Zusammensetzung umfasst.

EP 1 707 585 A1 beschreibt eine Einkomponenten-Epoxidharz-Zusammensetzung, die ein Epoxidharz, ein Polythiol, eine eine basische Komponente freisetzende Verbindung und eine Lewis Säure, beispielsweise einen Borsäureester umfasst.

JP 3 882374 B2 und EP 1 291 390 A1 beschreiben eine leitfähige HarzZusammensetzung umfassend ein Epoxidharz, ein Polythiol, einen latenten Härtungsbeschleuniger, einen Borsäureester und leitfähige Partikel.

Der vorliegenden Erfindung liegt daher die Aufgabe zugrunde, eine Epoxidharz-Zusammensetzung umfassend einen Härter bereitzustellen, die über einen größeren Zeitraum von mehreren Tagen gelagert werden kann, ohne dass eine Härtung zu beobachten ist. Diese Epoxidharz-Zusammensetzung soll eine hohe Latenz und somit eine hohe Lagerstabilität unterhalb der Härtungstemperatur sowie eine hohe Reaktivität bei der Härtungstemperatur aufweisen.

Gelöst werden konnten diese Aufgaben durch eine Verwendung gemäß Anspruch 1 sowie eine Epoxidharz-Zusammensetzung gemäß Anspruch 6. Bevorzugte Ausführungsformen der Erfindung sind in den Unteransprüchen angegeben, die wahlweise miteinander kombiniert werden können.

Damit ist gemäß einer ersten Ausführung die Verwendung von Boronsäuren der allgemeinen Formel (I) zur Erhöhung der Lagerstabilität von Epoxidharz-Zusammensetzungen, insbesondere flüssigen Epoxidharz-Zusammensetzungen, umfassend ein Epoxidharz, insbesondere ein flüssiges Epoxidharz, und einen Härter zur Härtung des Epoxidharzes Gegenstand der vorliegenden Erfindung, wobei für Formel (I) gilt 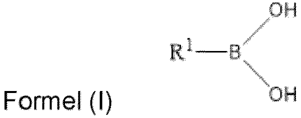
wobei für den Rest R¹ gilt:
   - R¹ =: Alkyl, Hydroxyalkyl oder ein Rest der Formel (II), wobei für Formel (II) gilt 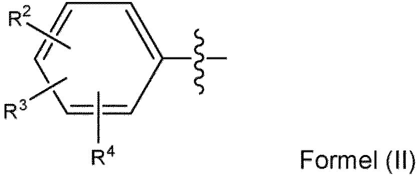
wobei für R², R³, R⁴ unabhängig voneinander gilt und mindestens ein Rest R², R³,
R⁴ ungleich Wasserstoff bedeutet:
   - R², R³, R⁴ =: Wasserstoff, Fluor, Chlor, Brom, lod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härter einen Härter gemäß Formel (III) umfasst, wobei für Formel (III) gilt: 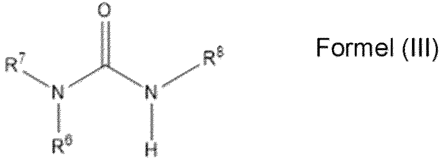
wobei für R⁶, R⁷, R⁸ unabhängig voneinander gilt:
   - R⁶, R⁷ =: unabhängig voneinander Wasserstoff oder C₁- bis C₅-Alkyl,
   - R⁸ =: mit -NHC(O)NR⁶R⁷ substituiertes C₁- bis C₁₅-Alkyl, mit -NHC(O)NR⁶R⁷ substituiertes C₃- bis C₁₅-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keinen Härter aus der Gruppe Cyanamid, Guanidine, Cyanoguanidine, Nitroguanidine, Acylguanidine, Biguanidine sowie keinen Härter gemäß allgemeiner Formel (IV) umfasst, wobei für Formel (IV) gilt 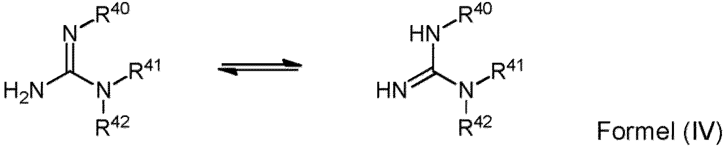
wobei für die Reste R⁴⁰, R⁴¹, R⁴² unabhängig voneinander gilt:
   - R⁴⁰ =: Cyano, Nitro, Acyl oder ein Rest der Formel -(C=X)-R⁴³, mit
   - X =: Imino oder Sauerstoff,
   - R⁴³ =: Amino, Alkylamino oder Alkoxy,
   - R⁴¹ =: Wasserstoff, C₁- bis C₅-Alkyl, Aryl, Benzyl, oder Acyl,
   - R⁴² =: Wasserstoff oder C₁- bis C₅-Alkyl.

Besonders bevorzugt umfasst die Epoxidharz-Zusammensetzung neben dem Härter der allgemeinen Formel (III) überhaupt keine weiteren Härter, Co-Härter, Härtungsbeschleuniger oder andere Katalysatoren zur Härtung von Epoxidharzen.

Damit ist gemäß einer weiteren Ausführung auch die Verwendung von Boronsäuren der allgemeinen Formel (I) zur Erhöhung der Lagerstabilität von Epoxidharz-Zusammensetzungen, insbesondere flüssigen Epoxidharz-Zusammensetzungen, umfassend ein Epoxidharz, insbesondere ein flüssiges Epoxidharz, und einen Härter zur Härtung des Epoxidharzes Gegenstand der vorliegenden Erfindung, wobei für Formel (I) gilt 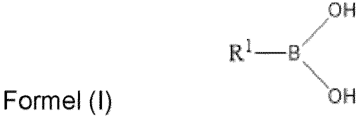
wobei für den Rest R¹ gilt:
   - R¹ =: Alkyl, Hydroxyalkyl oder ein Rest der Formel (II), wobei für Formel (II) gilt 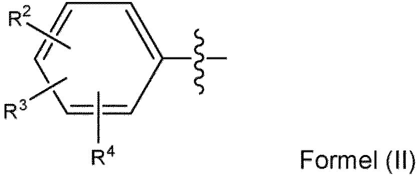
wobei für R², R³, R⁴ unabhängig voneinander gilt und mindestens ein Rest R², R³,
R⁴ ungleich Wasserstoff bedeutet:
   - R², R³, R⁴ =: Wasserstoff, Fluor, Chlor, Brom, Iod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härter einen Härter gemäß Formel (III) umfasst, wobei für Formel (III) gilt: 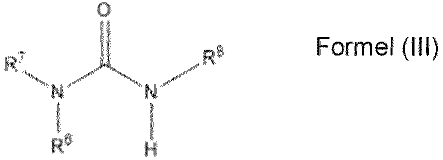
wobei für R⁶, R⁷, R⁸ unabhängig voneinander gilt:
   - R⁶, R⁷ =: unabhängig voneinander Wasserstoff oder C₁- bis C₅-Alkyl,
   - R⁸ =: mit -NHC(O)NR⁶R⁷ substituiertes C₁- bis C₁₅-Alkyl, mit -NHC(O)NR⁶R⁷ substituiertes C₃- bis C₁₅-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keine weiteren Härter, Co-Härter, Härtungsbeschleuniger oder andere Katalysatoren zur Härtung von Epoxidharzen umfasst.

Überraschenderweise hat sich gezeigt, dass eine Zugabe von erfindungsgemäßen Boronsäuren gemäß Formel (I) zu Epoxidharz-Zusammensetzungen, die ein Epoxidharz, einen Härter gemäß Formel (III) enthalten, die Lagerstabilität der somit zur Härtung bereits vorbereiteten Epoxidharz-Zusammensetzung deutlich verbessert. So kann beispielsweise die Latenz einer TDI-Uron-haltigen Epoxidharz-Zusammensetzung durch Zugabe von erfindungsgemäßen Boronsäuren um den Faktor 6 bis 12 erhöht werden (vgl. Beispiele), so dass entsprechende Epoxidharz-Zusammensetzungen bei Raumtemperatur bis 40 °C über einen Zeitraum von mindestens 2 Monaten länger gelagert und somit vorgehalten werden werden kann ohne auszuhärten im Vergleich zu einer ansonsten identischen Zusammensetzung, jedoch ohne die erfindungsgemäße Zugabe von Boronsäuren. Vollkommen überraschend hat sich gezeigt, dass die angestrebte Lagerstabilität erreicht wird, ohne dass sich die Reaktivität der Zusammensetzung wesentlich ändert. Durch den Zusatz von Boronsäuren werden die zu erreichende Glasübergangstemperatur sowie die mechanischen Eigenschaften von faserverstärkten Compositen nicht beeinträchtigt. So werden die Härtungseigenschaften der Härter und Härtungsbeschleuniger insgesamt, die erreicht werden ohne den Zusatz der Boronsäuren, nicht geändert und im Wesentlichen beibehalten. Diese Tatsachen sind in Gänze überraschend. Insgesamt kann somit eine Epoxidharz-Zusammensetzung zur Verfügung gestellt werden, die eine hohe Lagerstabilität bei Raumtemperatur und eine hohe Reaktivität bei der Härtungstemperatur aufweist und die hervorragend für den Einsatz in Prepregs, Towpregs und 1-Komponenten-Klebstoffen sowie Akustik-Dämmstoffen geeignet ist.

Gemäß der vorliegenden Erfindung bedeutet Epoxidharz-Zusammensetzung eine Zusammensetzung deren Epoxidharze wärmehärtbar sind, d.h. auf Grund ihrer funktionellen Gruppen, nämlich Epoxidgruppen, durch Wärme polymerisierbar, vernetzbar und/oder quervernetzbar sind. Hierbei erfolgt eine Polymerisation, Vernetzung und/oder Quervernetzung als Folge einer Polyaddition, die durch den Härter induziert wird.

Im Zusammenhang mit der vorliegenden Erfindung soll dabei unter Alkyl ein gesättigter, linearer oder verzweigter, aliphatischer Rest verstanden sein, insbesondere ein Alkylrest, der die allgemeine Formel CₙH₂ₙ₊₁ aufweist, wobei n die Anzahl der Kohlenstoffatome des Restes wiedergibt. Alkyl kann einen Rest mit einer größeren Anzahl an Kohlenstoffatomen bedeuteten. Bevorzugt bedeutet Alkyl einen gesättigten, linearen oder verzweigten, aliphatischer Rest, der die allgemeine Formel CₙH₂ₙ₊₁ aufweist, wobei n die Anzahl der Kohlenstoffatome des Restes wiedergibt und n eine Zahl von 1 bis 15 wiedergibt. Somit bedeutet Alkyl bevorzugt C₁- bis C₁₅-Alkyl, noch mehr bevorzugt C₁- bis C₁₀-Alkyl. Dabei ist weiter bevorzugt vorgesehen, dass C₁- bis C₁₅-Alkyl insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, n-Heptyl, n-Octyl, n-Nonyl, n-Decyl, n-Undecyl, n-Dodecyl, n-Tridecyl, n-Tetradecyl oder n-Pentadecyl bedeutet.

Weiterhin bedeutet C₁- bis C₅-Alkyl einen gesättigten, linearen oder verzweigten Alkylrest mit bis zu fünf Kohlenstoffatomen. Bevorzugt ist vorgesehen, dass C₁- bis C₅-Alkyl insbesondere Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeutet.

Gemäß der vorliegenden Erfindung bedeutet Hydroxyalkyl einen Alkylrest der oben genannten Bedeutung, der mit einer, zwei oder drei Hydroxygruppen substituiert ist. Gemäß der vorliegenden Erfindung bedeutet Hydroxyalkyl insbesondere einen Alkylrest, der bis zu 15 Kohlenstoffatome aufweist und der mit einer Hydroxygruppe substituiert ist. Somit bedeutet Hydroxyalkyl bevorzugt C₁- bis C₁₅-Hydroxyalkyl. Weiterhin bevorzugt steht Hydroxyalkyl für C₁- bis C₅-Hydroxyalkyl. Ganz besonders bevorzugt bedeutet Hydroxyalkyl Hydroxymethyl, 2-Hydroxyethyl, 3-Hydroxypropyl, 4-Hydroxybutyl oder 5-Hydroxypentyl.

Im Zusammenhang mit der vorliegenden Erfindung soll weiterhin unter C₃- bis C₁₅-Cycloalkyl ein gesättigter, monocyclischer oder bicyclischer aliphatischer Rest mit 3 bis 15 Kohlenstoffatomen verstanden sein, insbesondere ein Cycloalkylrest, der die allgemeine Formel CₙH₂ₙ₋₁, mit n = eine ganze Zahl von 3 bis 15, aufweist. Dabei ist bevorzugt vorgesehen, dass C₃- bis C₁₅-Cycloalkyl insbesondere Cyclopropyl, Cyclobutyl, Cyclopentyl, Cyclohexyl oder Cycloheptyl bedeutet, wobei diese Cycloalkylreste ihrerseits weiterhin bevorzugt einfach oder mehrfach mit Alkyl der oben beschriebenen Bedeutung substituiert sein können.

Gemäß der vorliegenden Erfindung bedeutet C₃- bis C₁₅-Cycloalkyl besonders bevorzugt Cyclopentyl, Cyclohexyl, die ihrerseits einfach oder mehrfach mit Alkyl substituiert sein können, insbesondere 3,3,5,5-Tetramethyl-1-Cyclohexyl.

Cyano bezeichnet eine Nitrilgruppe der allgemeinen Formel CN.

Nitro bezeichnet eine funktionelle Gruppe der allgemeinen Formel NO₂.

Amino bezeichnet eine funktionelle Gruppe der allgemeinen Formel NH₂.

Imino bezeichnet eine funktionelle Gruppe der allgemeinen Formel NH.

Alkylamino bedeutet einen Rest der Formel NHₙ(Alkyl)₂₋ₙ, mit n = 0 oder 1, wobei Alkyl ein Alkyl-Rest der oben angegeben Bedeutung ist und wobei die Bindungsstelle an dem Stickstoff lokalisiert ist.

Carboxyl bezeichnet eine funktionelle Gruppe der allgemeinen Formel COOH.

Alkoxy bedeutet einen Rest der Formel O-Alkyl, wobei Alkyl ein Alkyl-Rest der oben angegebenen Bedeutung ist und wobei die Bindungsstelle an dem Sauerstoff lokalisiert ist. Gemäß der vorliegenden Erfindung bedeutet Alkoxy, insbesondere einen Alkoxyrest, dessen Alkylrest bis zu 15 Kohlenstoffatome, insbesondere bis zu 5 Kohlenstoffatome aufweist. Somit bedeutet Alkoxy bevorzugt C₁- bis C₁₅-Alkoxy und mehr bevorzugt C₁- bis C₅-Alkoxy. Besonders bevorzugt bedeutet Alkoxy Methoxy, Ethoxy, n-Propoxy, n-Butoxy oder n-Pentoxy.

Acyl bedeutet einen Rest der Formel C(O)-R⁵, wobei R⁵ an den Kohlenstoff gebunden ist und Wasserstoff, Alkyl oder Alkoxy der oben angegeben Bedeutung sein kann und wobei die Bindungsstelle des Acylrestes an dem Kohlenstoff lokalisiert ist. Besonders bevorzugt bedeutet Acyl Formyl oder Acetyl.

Weiterhin bedeutet Alkylsulfonyl einen Rest der Formel SO₂-Alkyl, wobei sowohl die Bindungsstelle des Alkylsulfonylrestes als auch des Alkylrest an dem Schwefel lokalisiert ist und wobei Alkyl ein Alkyl-Rest der oben angegebenen Bedeutung ist. Gemäß der vorliegenden Erfindung bedeutet Alkylsulfonyl insbesondere einen Alkylsulfonylrest, dessen Alkylrest bis zu 15 Kohlenstoffatome aufweist. Somit bedeutet Alkylsulfonyl bevorzugt C₁- bis C₁₅-Alkylsulfonyl und mehr bevorzugt C₁-bis C₅-Alkylsulfonyl. Besonders bevorzugt bedeutet Alkylsulfonyl Methylsulfonyl, Ethylsulfonyl, n-Propylsulfonyl, n-Butylsulfonyl oder n-Pentyl-sulfonyl.

Gemäß der vorliegenden Erfindung bedeutet Aryl einen aromatischen Rest, insbesondere einen aromatischen Rest mit 6 bis 15 Kohlenstoffatomen, der monocyclisch, bicyclisch oder polycyclisch sein kann. Somit bedeutet Aryl bevorzugt C₆- bis C₁₅-Aryl, insbesondere Benzylphenyl oder einen C₆- bis C₁₅-Arylrest, der seinerseits einfach mit Arylalkyl, insbesondere Arylmethyl, insbesondere Phenylmethyl, substituiert ist. Besonders bevorzugt bedeutet Aryl Phenyl, Naphthyl, Anthryl, Phenantryl, Pyrenyl oder Perylenyl, ganz besonders bevorzugt Phenyl.

Weiterhin bedeutet gemäß der vorliegenden Erfindung Alkylaryl einen aromatischen Rest, der oben beschriebenen Art, der seinerseits einfach oder mehrfach mit Alkyl der oben beschriebenen Art substituiert ist. Insbesondere bedeutet Alkylaryl einen aromatischen Rest, der 6 bis 15 Kohlenstoffatome aufweist. Somit bedeutet Alkylaryl bevorzugt C₆- bis C₁₅-Alkylaryl. Weiterhin bevorzugt bedeutet Alkylaryl Methylphenyl, Dimethylphenyl oder Trimethylphenyl.

Erfindungsgemäß können Boronsäuren der Formel (I) eingesetzt bzw. verwendet werden, wobei R¹ in Formel (I) Alkyl, Hydroxyalkyl oder einen Rest der Formel (II) bedeuten kann. Bevorzugt kann dabei R¹ in Formel (I) Alkyl oder Hydroxyalkyl bedeuten, wobei weiter bevorzugt vorgesehen ist, dass R¹ die folgende Bedeutung aufweist:
- R¹ =: Methyl, Ethyl, n-Propyl, 1-Methylethyl, n-Butyl, 1-Methylpropyl, 2-Methylpropyl, n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

Gemäß der vorliegenden Erfindung kann R¹ auch einen Rest der Formel (II) bedeuten, wobei mindestens ein Substituent R², R³, R⁴ ungleich Wasserstoff bedeutet. Somit kann alternativ bevorzugt R¹ in Formel (I) einen Rest der Formel (II) bedeuten, wobei für die Reste R², R³, R⁴ in Formel (II) gilt:
- R² =: Fluor, Chlor, Brom, Iod, Cyano, C₁- bis C₅-Alkyl, Alkoxy, Acyl, Alkylsulfonyl, Aryl, Carboxyl oder B(OH)₂,
- R³, R⁴ =: Wasserstoff.

Weiter bevorzugt kann R¹ in Formel (I) einen Rest der Formel (II) bedeuten, wobei für die Reste R², R³, R⁴ in Formel (II) gilt:
- R² =: Fluor, Acyl, Alkoxy oder B(OH)₂,
- R³, R⁴ =: Wasserstoff.

Noch weiter bevorzugt kann R¹ in Formel (I) einen Rest der Formel (II) bedeuten, wobei für die Reste R², R³, R⁴ in Formel (II) gilt:
- R² =: Fluor, Formyl, Acetyl, Methoxy, Ethoxy, n-Propoxy, n-Butoxy, n-Pentoxy oder B(OH)₂,
- R³, R⁴ =: Wasserstoff.

Gemäß einer weiteren Alternative können bevorzugt auch Boronsäuren gemäß Formel (I) eingesetzt oder verwendet werden, wobei R¹ in Formel (I) bevorzugt einen Rest der Formel (II) bedeutet, wobei für die Reste R², R³, R⁴ in Formel (II) gilt:
- R², R³ =: unabhängig voneinander Fluor, Chlor, Brom, Iod, Cyano, C₁- bis C₅-Alkyl, Alkoxy, Acyl, Alkylsulfonyl, Aryl, Carboxyl oder B(OH)₂,
- R⁴ =: Wasserstoff.

Weiter bevorzugt kann R¹ in Formel (I) einen Rest der Formel (II) bedeuten, wobei für die Reste R², R³, R⁴ in Formel (II) gilt:
- R², R³ =: unabhängig voneinander Fluor, Acyl, Alkoxy oder B(OH)₂,
- R⁴ =: Wasserstoff.

Noch weiter bevorzugt kann R¹ in Formel (I) einen Rest der Formel (II) bedeuten, wobei für die Reste R², R³, R⁴ in Formel (II) gilt:
- R², R³ =: unabhängig voneinander Fluor, Formyl, Acetyl, Methoxy, Ethoxy, n-Propoxy, n-Butoxy, n-Pentoxy oder B(OH)₂,
- R⁴ =: Wasserstoff.

Gemäß einer weiteren Alternative können bevorzugt Boronsäuren gemäß Formel (I) eingesetzt oder verwendet werden, wobei R¹ in Formel (I) bevorzugt einen Rest der Formel (II) bedeutet, wobei für die Reste R², R³, R⁴ in Formel (II) unabhängig voneinander gilt:
- R², R³, R⁴ =: Fluor, Chlor, Brom, Iod, Cyano, C₁- bis C₅-Alkyl, Alkoxy, Acyl, Alkylsulfonyl, Aryl, Carboxyl oder B(OH)₂.

Weiter bevorzugt kann R¹ in Formel (I) einen Rest der Formel (II) bedeuten, wobei für die Reste R², R³, R⁴ in Formel (II) unabhängig voneinander gilt:
- R², R³, R⁴ =: Fluor oder C₁- bis C₅-Alkyl.

Noch weiter bevorzugt kann R¹ in Formel (I) einen Rest der Formel (II) bedeuten, wobei für die Reste R², R³, R⁴ in Formel (II) unabhängig voneinander gilt:
- R², R³, R⁴ =: Fluor, Methyl, Ethyl, n-Propyl, 1-Methylethyl, n-Butyl, 1-Methylpropyl, 2-Methylpropyl, 1,1-Dimethylethyl, n-Pentyl.

Ganz besonders bevorzugt steht Formel (I) für eine Substanz ausgewählt aus der Gruppe 4-Formylphenylboronsäure, 1,4-Benzendiboronsäure, 3-Fluorphenylboronsäure, 2,4-Difluorphenylboronsäure, 2,5-Dimethoxyphenylboronsäure, Methylboronsäure, 4-Ethylphenylboronsäure, 1-Octylboronsäure, 2-Carboxyphenylboronsäure, 3-Carboxyphenylboronsäure, 4-Carboxyphenylboronsäure, (2-Hydroxymethyl)phenylboronsäure, 4-Cyanophenylboronsäure, 4-(Methan-sulfonyl)phenylboronsäure, 3,4,5-Trifluorphenylboronsäure oder deren Gemische.

Die Verwendung dieser Boronsäuren in Epoxidharz-Zusammensetzungen kann die Lagerstabilität von zur Härtung bereits vorbereiteten Epoxidharz-Zusammensetzungen in aussergewöhnlich hohem Maß verbessern.

Ganz besonders bevorzugt werden Verbindungen der Formel (III) als Härter eingesetzt, bei denen alle Reste R⁶ und R⁷ gleich sind, insbesondere Methyl, Ethyl, n-Propyl, i-Propyl, n-Butyl oder n-Pentyl. Bevorzugt sind zumindest die beiden Reste R⁶ und die beiden Reste R⁷ gleich, wobei die Reste ausgewählt sind aus der Gruppe Methyl, Ethyl, n-Propyl, i-Propyl, n-Butyl oder n-Pentyl.. Es können aber auch die beiden Reste R⁶ oder die beiden Reste R⁷ oder alle vier Reste voneinander verschieden sein, wobei auch in diesen Fällen die Reste bevorzugt aus der Gruppe Methyl, Ethyl, n-Propyl, i-Propyl, n-Butyl oder n-Pentyl. ausgewählt sind.

Gemäß einem weiterführenden Gedanken ist daher auch eine Epoxidharz-Zusammensetzung, insbesondere eine flüssige Epoxidharz-Zusammensetzung, Gegenstand der vorliegenden Erfindung, die ein Epoxidharz, insbesondere ein flüssiges Epoxidharz, und einen Härter zur Härtung des Epoxidharzes sowie mindestens eine Boronsäure der allgemeinen Formel (I) umfasst, wobei für Formel (I) gilt: 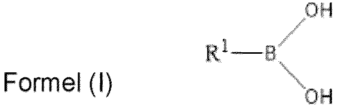
wobei für den Rest R¹ gilt:
   - R¹ =: Alkyl, Hydroxyalkyl oder ein Rest der Formel (II), wobei für Formel (II) gilt 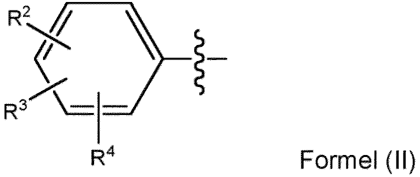
wobei für R², R³, R⁴ unabhängig voneinander gilt und mindestens ein Rest R², R³,
R⁴ ungleich Wasserstoff bedeutet:
   - R², R³, R⁴ =: Wasserstoff, Fluor, Chlor, Brom, Iod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härter einen Härter gemäß Formel (III) umfasst, wobei für Formel (III) gilt: 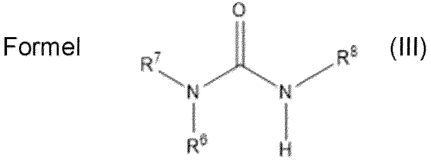
wobei für R⁶, R⁷, R⁸ unabhängig voneinander gilt:
   - R⁶, R⁷ =: unabhängig voneinander Wasserstoff oder C₁- bis C₅-Alkyl,
   - R⁸ =: mit -NHC(O)NR⁶R⁷ substituiertes C₁- bis C₁₅-Alkyl, mit -NHC(O)NR⁶R⁷ substituiertes C₃- bis C₁₅-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keinen Härter aus der Gruppe Cyanamid, Guanidine, Cyanoguanidine, Nitroguanidine, Acylguanidine, Biguanidine sowie keinen Härter gemäß allgemeiner Formel (IV) umfasst, wobei für Formel (IV) gilt 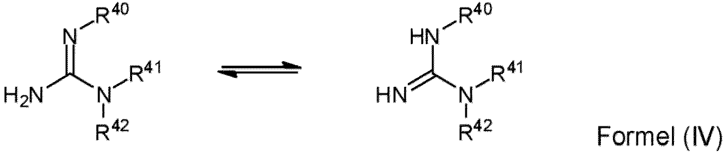
wobei für die Reste R⁴⁰, R⁴¹, R⁴² unabhängig voneinander gilt:
   - R⁴⁰ =: Cyano, Nitro, Acyl oder ein Rest der Formel -(C=X)-R⁴³, mit
   X = Imino oder Sauerstoff,
   R⁴³ = Amino, Alkylamino oder Alkoxy,
   - R⁴¹ =: Wasserstoff, C₁- bis C₅-Alkyl, Aryl, Benzyl, oder Acyl,
   - R⁴² =: Wasserstoff oder C₁- bis C₅-Alkyl.

Besonders bevorzugt umfasst die Epoxidharz-Zusammensetzung auch in dieser Ausführung neben dem Härter der allgemeinen Formel (III) überhaupt keine weiteren Härter, Co-Härter, Härtungsbeschleuniger oder andere Katalysatoren zur Härtung von Epoxidharzen.

Somit ist auch eine Epoxidharz-Zusammensetzung, insbesondere eine flüssige Epoxidharz-Zusammensetzungen, umfassend ein Epoxidharz, insbesondere ein flüssiges Epoxidharz, und einen Härter zur Härtung des Epoxidharzes, Gegenstand der vorliegenden Erfindung, wobei für Formel (I) gilt 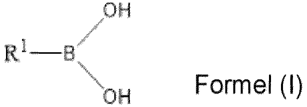
wobei für den Rest R¹ gilt:
   - R¹ =: Alkyl, Hydroxyalkyl oder ein Rest der Formel (II), wobei für Formel (II) gilt 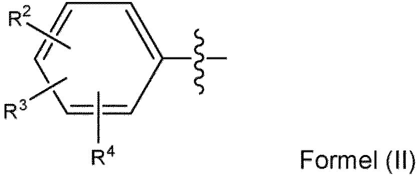
wobei für R², R³, R⁴ unabhängig voneinander gilt und mindestens einen Rest R², R³, R⁴ ungleich Wasserstoff bedeutet:
   - R², R³, R⁴ =: Wasserstoff, Fluor, Chlor, Brom, Iod, Cyano, C₁- bis C₅-Alkyl, Alkoxy, Acyl, Alkylsulfonyl, Aryl, Carboxyl, oder B(OH)₂,
wobei die Epoxidharz-Zusammensetzung als Härter einen Härter gemäß Formel (III) umfasst, wobei für Formel (III) gilt: 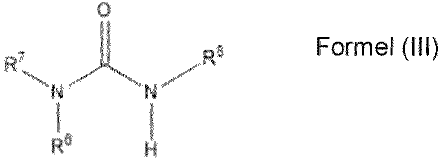
wobei für R⁶, R⁷, R⁸ unabhängig voneinander gilt:
   - R⁶, R⁷ =: unabhängig voneinander Wasserstoff oder C₁- bis C₅-Alkyl,
   - R⁸ =: mit -NHC(O)NR⁶R⁷ substituiertes C₁- bis C₁₅-Alkyl, mit -NHC(O)NR⁶R⁷ substituiertes C₃- bis C₁₅-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keine weiteren Härter, Co-Härter, Härtungsbeschleuniger oder andere Katalysatoren zur Härtung von Epoxidharzen umfasst.

Gemäß einem weiterführenden Gedanken ist somit auch eine Epoxidharz-Zusammensetzung, insbesondere eine flüssige Epoxidharz-Zusammensetzung, Gegenstand der vorliegenden Erfindung, die aus mindestens einem Epoxidharz, insbesondere mindestens einem flüssigen Epoxidharz, und einem Härter zur Härtung des Epoxidharzes sowie mindestens einer Boronsäure der allgemeinen Formel (I) besteht, wobei der Härter aus mindestens einem Harnstoffderivat gemäß Formel (III) besteht.

Überraschender Weise hat sich gezeigt, dass derartige Epoxidharz-Zusammensetzungen besonders lagerstabil sind. So hat sich gezeigt, dass erfindungsgemäße Epoxidharz-Zusammensetzungen im Vergleich zu bekannten Epoxidharz-Zusammensetzungen deutlich höhere Lagerstabilitäten aufweisen (vgl. Beispiele). Die erfindungsgemäßen Epoxidharz-Zusammensetzungen können gegenüber den vergleichbaren Epoxidharz-Zusammensetzungen ohne Boronsäuren unter gleichen Bedingungen um mindestens das 6 bis 16-fache, also um mindestens Faktor 6 bis 16, länger gelagert werden bzw. sind länger lagerstabil. Vollkommen überraschend hat sich gezeigt, dass die sonstigen Härtungseigenschaften, wie beispielsweise die Reaktivität der Zusammensetzung, vergleichbar mit Härtungseigenschaften bekannter Zusammensetzungen sind und nicht wesentlich verändert sind. So können diese Zusammensetzungen hervorragend zu Herstellung von Prepregs, Towpregs und 1-Komponenten-Klebstoffen sowie Akustik-Dämmstoffen verwendet werden.

Bevorzugte Ausführungen der oben genannten Verwendung, insbesondere der Verwendung von bevorzugten Boronsäuren, sind auch bevorzugte Ausführungen erfindungsgemäßer Epoxidharz-Zusammensetzungen. Somit umfassen erfindungsgemäße Epoxidharz-Zusammensetzungen bevorzugt Boronsäuren der Formel (I), wobei R¹ in Formel (I) bevorzugt Alkyl oder Hydroxyalkyl bedeuten kann. Weiter bevorzugt kann R¹ in Formel (I) bedeuten:
- R¹ =: Methyl, Ethyl, n-Propyl, 1-Methylethyl, n-Butyl, 1-Methylpropyl, 2-Methylpropyl, n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

Gemäß der vorliegenden Erfindung kann R¹ auch einen Rest der Formel (II) bedeuten, wobei mindestens ein Substituent R², R³, R⁴ ungleich Wasserstoff bedeutet. Somit kann die Epoxidharz-Zusammensetzung alternativ bevorzugt eine Boronsäure gemäß Formel (I) umfassen, in der R¹ für einen Rest der Formel (II) steht, wobei für die Reste R², R³, R⁴ in Formel (II) gilt:
- R² =: Fluor, Chlor, Brom, Iod, Cyano, C₁- bis C₅-Alkyl, Alkoxy, Acyl, Alkylsulfonyl, Aryl, Carboxyl oder B(OH)₂,
- R³, R⁴ =: Wasserstoff.

Weiter bevorzugt kann R¹ in Formel (I) einen Rest der Formel (II) bedeuten, wobei für die Reste R², R³, R⁴ in Formel (II) gilt:
- R² =: Fluor, Acyl, Alkoxy oder B(OH)₂,
- R³, R⁴ =: Wasserstoff.

Noch weiter bevorzugt kann R¹ in Formel (I) einen Rest der Formel (II) bedeuten, wobei für die Reste R², R³, R⁴ in Formel (II) gilt:
- R² =: Fluor, Formyl, Acetyl, Methoxy, Ethoxy, n-Propoxy, n-Butoxy, n-Pentoxy oder B(OH)₂,
- R³, R⁴ =: Wasserstoff.

Gemäß einer weiteren Alternative kann die Epoxidharz-Zusammensetzung alternativ bevorzugt auch eine Boronsäure gemäß Formel (I) umfassen, in der R¹ für einen Rest der Formel (II) steht, wobei für die Reste R², R³, R⁴ in Formel (II) gilt:
- R², R³ =: unabhängig voneinander Fluor, Chlor, Brom, Iod, Cyano, C₁- bis C₅-Alkyl, Alkoxy, Acyl, Alkylsulfonyl, Aryl, Carboxyl oder B(OH)₂,
- R⁴ =: Wasserstoff.

Weiter bevorzugt kann R¹ in Formel (I) einen Rest der Formel (II) bedeuten, wobei für die Reste R², R³, R⁴ in Formel (II) gilt:
- R², R³ =: unabhängig voneinander Fluor, Acyl, Alkoxy oder B(OH)₂,
- R⁴ =: Wasserstoff.

Noch weiter bevorzugt kann R¹ in Formel (I) einen Rest der Formel (II) bedeuten, wobei für die Reste R², R³, R⁴ in Formel (II) gilt:
- R², R³ =: unabhängig voneinander Fluor, Formyl, Acetyl, Methoxy, Ethoxy, n-Propoxy, n-Butoxy, n-Pentoxy oder B(OH)₂,
- R⁴ =: Wasserstoff.

Gemäß einer weiteren Alternative kann die Epoxidharz-Zusammensetzung alternativ bevorzugt auch eine Boronsäure gemäß Formel (I) umfassen, in der R¹ für einen Rest der Formel (II) steht, wobei für die Reste R², R³, R⁴ in Formel (II) unabhängig voneinander gilt:
- R², R³, R⁴ =: Fluor, Chlor, Brom, Iod, Cyano, C₁- bis C₅-Alkyl, Alkoxy, Acyl, Alkylsulfonyl, Aryl, Carboxyl oder B(OH)₂.

Weiter bevorzugt kann R¹ in Formel (I) einen Rest der Formel (II) bedeuten, wobei für die Reste R², R³, R⁴ in Formel (II) unabhängig voneinander gilt:
- R², R³, R⁴ =: Fluor oder C₁- bis C₅-Alkyl.

Noch weiter bevorzugt kann R¹ in Formel (I) einen Rest der Formel (II) bedeuten, wobei für die Reste R², R³, R⁴ in Formel (II) unabhängig voneinander gilt:
- R², R³, R⁴ =: Fluor, Methyl, Ethyl, n-Propyl, 1-Methylethyl, n-Butyl, 1-Methylpropyl, 2-Methylpropyl, 1,1-Dimethylethyl, n-Pentyl.

Ganz besonders bevorzugt kann die Epoxidharz-Zusammensetzung eine Boronsäure gemäß Formel (I) umfassen, wobei Formel (I) für eine Substanz ausgewählt aus der Gruppe 4-Formylphenylboronsäure, 1,4-Benzendiboronsäure, 3-Fluorphenylboronsäure, 2,4-Difluorphenylboronsäure, 2,5-Dimethoxyphenylboronsäure, Methylboronsäure, 4-Ethylphenylboronsäure, 1-Octylboronsäure, 2-Carboxyphenylboronsäure, 3-Carboxyphenylboronsäure, 4-Carboxyphenylboronsäure, (2-Hydroxymethyl)phenylboronsäure, 4-Cyanophenylboronsäure, 4-(Methansulfonyl)phenylboronsäure, 3,4,5-Trifluorphenylboronsäure oder deren Gemische, steht.

Als Härter zur Härtung des Epoxidharzes werden gemäß der vorliegenden Erfindung Harnstoffderivate gemäß Formel (III) verwendet oder eingesetzt, wobei für Formel (III) gilt 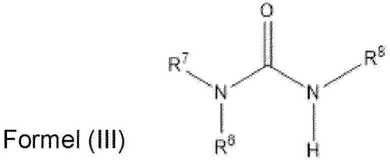 wobei für R⁶, R⁷, R⁸ unabhängig voneinander gilt:
- R⁶, R⁷ =: unabhängig voneinander Wasserstoff oder C₁- bis C₅-Alkyl,
- R⁸ =: mit -NHC(O)NR⁶R⁷ substituiertes C₁- bis C₁₅-Alkyl, mit -NHC(O)NR⁶R⁷ substituiertes C₃- bis C₁₅-Cycloalkyl, mit -NHC(O)NR⁶R⁷ substituiertes Aryl oder mit -NHC(O)NR⁶R⁷ substituiertes Alkylaryl.

Diese Harnstoffderivate können aufgrund ihrer Eigenschaften besonders gut zur schonenden Härtung von Epoxidharzen und Epoxidharz-Zusammensetzungen eingesetzt werden.

Von den mit Formel (III) beschriebenen Harnstoffderivaten können gemäß der vorliegenden Erfindung aromatische Harnstoffderivate bevorzugt eingesetzt bzw. verwendet werden. Weiter bevorzugt werden hierbei aromatische Harnstoffderivate der Formel (III) eingesetzt, wobei für die Reste R⁶, R⁷, R⁸ unabhängig gilt:
- R⁶, R⁷ =: unabhängig voneinander C₁- bis C₅-Alkyl, insbesondere Methyl oder Ethyl,
- R⁸ =: mit -NHC(O)NR⁶R⁷ substituiertes Aryl oder mit -NHC(O)NR⁶R⁷ substituiertes Alkylaryl.

Weiter bevorzugt können die Reste R⁶, R⁷, R⁸ unabhängig voneinander bedeuten:
- R⁶, R⁷ =: unabhängig voneinander C₁- bis C₅-Alkyl, insbesondere Methyl oder Ethyl,
- R⁸ =: mit -NHC(O)NR⁶R⁷ substituiertes Alkylaryl.

Somit sind gemäß der vorliegenden Erfindung Harnstoffderivate gemäß Formel (III) besonders bevorzugt, in der ein Harnstoffderivat gemäß Formel (V) für ein Harnstoffderivat gemäß Formel (III) steht. Gemäß der vorliegenden Erfindung werden dabei Harnstoffderivate gemäß Formel (V) besonders bevorzugt, wobei für Formel (V) gilt: 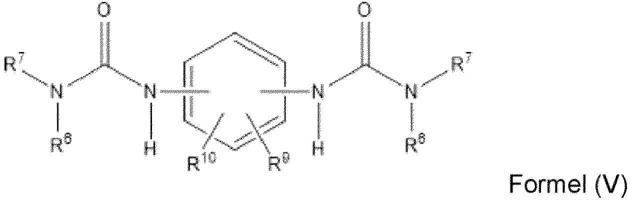 und wobei für die Reste R⁶, R⁷, R⁹, R¹⁰ unabhängig voneinander gilt:
- R⁶, R⁷ =: unabhängig voneinander Wasserstoff oder C₁- bis C₅-Alkyl, insbesondere Methyl oder Ethyl,
- R⁹, R¹⁰ =: unabhängig voneinander Wasserstoff oder C₁- bis C₅-Alkyl, insbesondere Wasserstoff, Methyl oder Ethyl.

Bevorzugt bedeuten die Reste R⁶, R⁷, R⁹ in Zusammenhang mit der Formel (V) jeweils einen Methylrest und R¹⁰ bedeutet Wasserstoff. Besonders bevorzugt ist 1,1'-(4-Methyl-m-phenylen)bis(3,3-dimethylharnstoff) und 1,1'-(2-Methyl-m-phenylen)bis(3,3-dimethylharnstoff).

Weiter bevorzugt können die Reste R⁶, R⁷, R⁸ unabhängig voneinander bedeuten:
- R⁶, R⁷ =: unabhängig voneinander C₁- bis C₅-Alkyl, insbesondere Methyl oder Ethyl,
- R⁸ =: mit -NHC(O)NR⁶R⁷ substituiertes Aryl, insbesondere mit -NHC(O)NR⁶R⁷ substituiertes Benzylphenyl.

Somit sind gemäß der vorliegenden Erfindung Harnstoffderivate gemäß Formel (III) besonders bevorzugt, in der ein Harnstoffderivat gemäß Formel (VII) für ein Harnstoffderivat gemäß Formel (III) steht. Gemäß der vorliegenden Erfindung werden dabei Harnstoffderivate gemäß Formel (VII) besonders bevorzugt, wobei für Formel (VII) gilt: 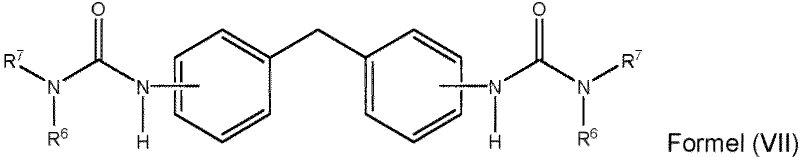 und wobei für die Reste R⁶, R⁷ unabhängig voneinander gilt:
- R⁶, R⁷ =: unabhängig voneinander Wasserstoff oder C₁- bis C₅-Alkyl, insbesondere Methyl oder Ethyl.

Besonders bevorzugt bedeuten die Reste R⁶, R⁷ in Zusammenhang mit der Formel (VII) jeweils Methyl. Ganz besonders bevorzugt ist 1,1'-(Methylendi-p-phenylen)bis[3,3-dimethylharnstoff].

Von den mit Formel (III) beschriebenen Harnstoffderivaten können weiterhin bevorzugt aliphatische Harnstoffderivate eingesetzt werden. Weiter bevorzugt werden hierbei aliphatische Harnstoffderivate der Formel (III) wobei für die Reste R⁶, R⁷, R⁸ unabhängig gilt:
- R⁶, R⁷ =: unabhängig voneinander Wasserstoff oder C₁- bis C₅-Alkyl, insbesondere Methyl oder Ethyl,
- R⁸ =: mit -NHC(O)NR⁵R⁶ substituiertes C₁- bis C₁₅-Alkyl oder mit -NHC(O)NR⁵R⁶ substituiertes C₃- bis C₁₅-Cycloalkyl.

Weiterhin bevorzugt sind aliphatische Harnstoffderivate gemäß Formel (III), in welchen R⁶ und R⁷ die oben angegebene Bedeutung haben, insbesondere Methyl oder Ethyl, und R³ mit -NHC(O)NR¹R² substituiertes C₁- bis C₁₅-Cycloalkyl bedeutet.

Somit sind gemäß der vorliegenden Erfindung Harnstoffderivate gemäß Formel (III) besonders bevorzugt, in der ein Harnstoffderivat gemäß Formel (VI) für ein Harnstoffderivat gemäß Formel (III) steht. Gemäß der vorliegenden Erfindung werden dabei Harnstoffderivate gemäß Formel (VI) besonders bevorzugt, wobei für Formel (VI) gilt: 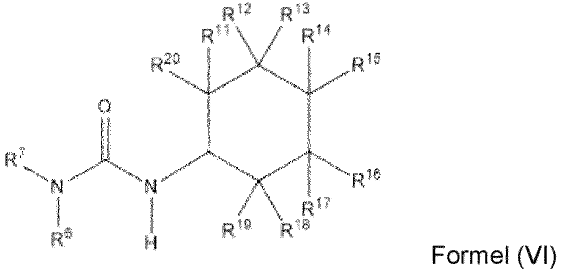
wobei für die Reste gleichzeitig oder unabhängig voneinander gilt:
   R⁶, R⁷ = unabhängig voneinander Wasserstoff oder C₁- bis C₅-Alkyl, insbesondere Methyl oder Ethyl;
   R¹¹, R¹², R¹³, R¹⁴, R¹⁵, R¹⁶, R¹⁷, R¹⁸, R¹⁹, R²⁰ = unabhängig voneinander Wasserstoff, C₁- bis C₅-Alkyl oder mit -NHC(O)NR⁶R⁷ substituiertes C₁- bis C₅-Alkyl,
wobei ein Rest R¹¹, R¹² , R¹³ , R¹⁴, R¹⁵, R¹⁶, R¹⁷, R¹⁸, R¹⁹ oder R²⁰ mit -NHC(O)NR⁶R⁷ substituiertes C₁- bis C₅-Alkyl bedeutet,

Weiterhin bevorzugt sind Härter umfassend aliphatische Harnstoffderivate der Formel (VI) in der R⁶ und R⁷ unabhängig voneinander Methyl oder Ethyl und R¹¹, R¹², R¹³, R¹⁴, R¹⁵, R¹⁶, R¹⁷, R¹⁸, R¹⁹, R²⁰ unabhängig voneinander Wasserstoff, Methyl, Ethyl, -NHC(O)NR⁶R⁷ oder mit -NHC(O)NR⁶R⁷ substituiertes Methyl oder Ethyl bedeuten. Besonders bevorzugt ist 1-(N,N-Dimethylharnstoff)-3-(N,N-dimethylharnstoff-methyl)-3,5,5-trimethylcyclohexan, nachfolgend auch N'-[3-[[[(dimethylamino)carbonyl]-amino]methyl]-3,5,5-trimethylcyclohexyl]-N,N-dimethylharnstoff (also R⁶ = R⁷ = R¹² = R¹³ = R¹⁶ = Methyl und R¹⁷ = -CH₂-NHC(O)N(CH₃)₂ und R¹¹ = R¹⁴ = R¹⁵ = R¹⁸ = R¹⁹ = R²⁰ = Wasserstoff).

Somit ist auch eine Epoxidharz-Zusammensetzung bevorzugt, insbesondere eine flüssige Epoxidharz-Zusammensetzung, die ein Epoxidharz, insbesondere ein flüssiges Epoxidharz, sowie einen Härter zur Härtung des Epoxidharzes ausgewählt aus der Gruppe der Härter gemäß Formel (V) oder Formel (VI) oder Formel (VII), sowie mindestens eine Boronsäure der allgemeinen Formel (I) umfasst, wobei für Formel (I) gilt: 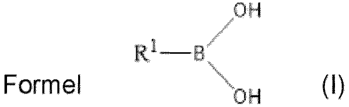
wobei für den Rest R¹ gilt:
   - R¹ =: Alkyl, Hydroxyalkyl oder ein Rest der Formel (II), wobei für Formel (II) gilt 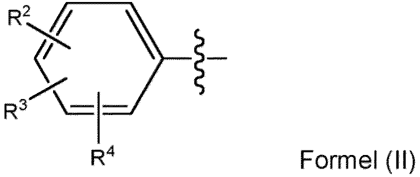
wobei für R², R³, R⁴ unabhängig voneinander gilt und mindestens einen Rest R²,
R³, R⁴ ungleich Wasserstoff bedeutet:
   - R², R³, R⁴ =: Wasserstoff, Fluor, Chlor, Brom, Iod, Cyano, C₁- bis C₅-Alkyl, Alkoxy, Acyl, Alkylsulfonyl, Aryl, Carboxyl, oder B(OH)₂,
wobei für Formel (V) gilt: 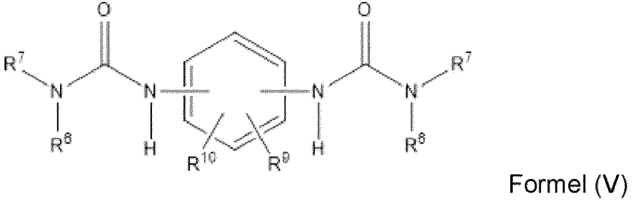
und wobei für die Reste R⁶, R⁷, R⁹, R¹⁰ unabhängig voneinander gilt:
   - R⁶, R⁷ =: unabhängig voneinander Wasserstoff oder C₁- bis C₅-Alkyl, insbesondere Methyl oder Ethyl,
   - R⁹, R¹⁰ =: unabhängig voneinander Wasserstoff oder C₁- bis C₅-Alkyl, insbesondere Wasserstoff, Methyl oder Ethyl,
wobei für Formel (VI) gilt: 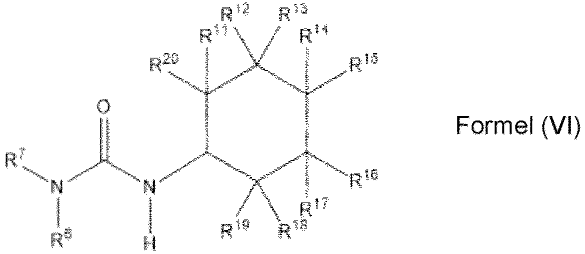
wobei für die Reste gleichzeitig oder unabhängig voneinander gilt:
   - R⁶, R⁷ =: unabhängig voneinander Wasserstoff oder C₁- bis C₅-Alkyl, insbesondere Methyl oder Ethyl;
   - R¹¹, R¹², R¹³, R¹⁴, R¹⁵, R¹⁶, R¹⁷, R¹⁸, R¹⁹, R²⁰=: unabhängig voneinander Wasserstoff, C₁- bis C₅-Alkyl, insbesondere Methyl oder Ethyl, oder mit -NHC(O)NR⁶R⁷ substituiertes C₁- bis C₅-Alkyl, insbesondere mit -NHC(O)NR⁶R⁷ substituiertes Methyl oder Ethyl,
wobei ein Rest R¹¹, R¹² , R¹³ , R¹⁴, R¹⁵, R¹⁶, R¹⁷, R¹⁸, R¹⁹ oder R²⁰ mit -NHC(O)NR⁶R⁷ substituiertes C₁- bis C₅-Alkyl bedeutet,
wobei für Formel (VII) gilt: 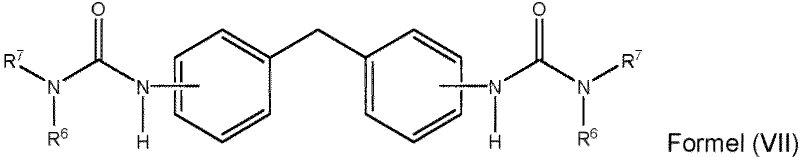
und wobei für die Reste R⁶, R⁷ unabhängig voneinander gilt:
   - R⁶, R⁷ =: unabhängig voneinander Wasserstoff oder C₁- bis C₅-Alkyl, insbesondere Methyl oder Ethyl,
wobei die Epoxidharz-Zusammensetzung neben dem Härter der allgemeinen Formel (V) oder Formel (VI) oder Formel (VII) keinen Härter aus der Gruppe Cyanamid, Guanidine, Cyanoguanidine, Nitroguanidine, Acylguanidine, Biguanidine sowie keinen Härter gemäß allgemeiner Formel (IV) umfasst, wobei für Formel (IV) gilt: 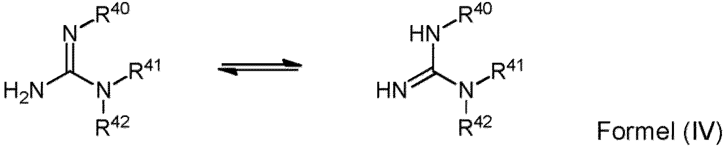
wobei für die Reste R⁴⁰, R⁴¹, R⁴² unabhängig voneinander gilt:
   - R⁴⁰ =: Cyano, Nitro, Acyl oder ein Rest der Formel -(C=X)-R⁴³, mit
   X = Imino oder Sauerstoff,
   R⁴³ = Amino, Alkylamino oder Alkoxy,
   - R⁴¹ =: Wasserstoff, C₁- bis C₅-Alkyl, Aryl, Benzyl, oder Acyl,
   - R⁴² =: Wasserstoff oder C₁- bis C₅-Alkyl.

Besonders bevorzugt umfasst die Epoxidharz-Zusammensetzung auch in dieser Ausführung neben dem Härter der allgemeinen Formel (V) oder Formel (VI) oder Formel (VII) überhaupt keine weiteren Härter, Co-Härter, Härtungsbeschleuniger oder andere Katalysatoren zur Härtung von Epoxidharzen.

Somit ist auch eine Epoxidharz-Zusammensetzung bevorzugt, insbesondere eine flüssige Epoxidharz-Zusammensetzung, die ein Epoxidharz, insbesondere ein flüssiges Epoxidharz, sowie einen Härter zur Härtung des Epoxidharzes ausgewählt aus der Gruppe der Härter gemäß Formel (V) oder Formel (VI) oder Formel (VII), sowie mindestens eine Boronsäure der allgemeinen Formel (I) umfasst, wobei für Formel (I) gilt: 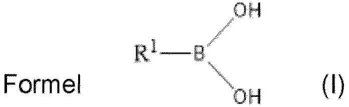
wobei für den Rest R¹ gilt:
   - R¹ =: Alkyl, Hydroxyalkyl oder ein Rest der Formel (II), wobei für Formel (II) gilt 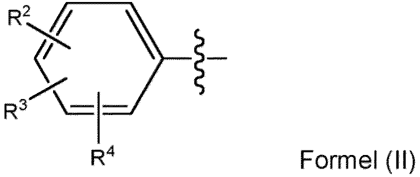
wobei für R², R³, R⁴ unabhängig voneinander gilt und mindestens einen Rest R²,
R³, R⁴ ungleich Wasserstoff bedeutet:
   - R², R³, R⁴ =: Wasserstoff, Fluor, Chlor, Brom, Iod, Cyano, C₁- bis C₅-Alkyl, Alkoxy, Acyl, Alkylsulfonyl, Aryl, Carboxyl, oder B(OH)₂,
wobei für Formel (V) gilt: 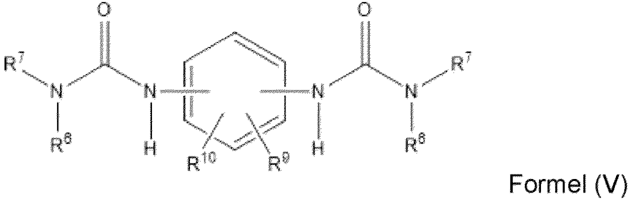
und wobei für die Reste R⁶, R⁷, R⁹, R¹⁰ unabhängig voneinander gilt:
   - R⁶, R⁷ =: unabhängig voneinander Wasserstoff oder C₁- bis C₅-Alkyl, insbesondere Methyl oder Ethyl,
   - R⁹, R¹⁰ =: unabhängig voneinander Wasserstoff oder C₁- bis C₅-Alkyl, insbesondere Wasserstoff, Methyl oder Ethyl,
wobei für Formel (VI) gilt 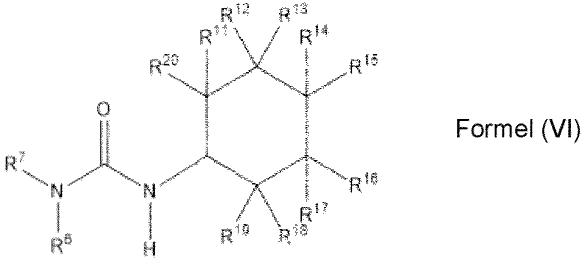
wobei für die Reste gleichzeitig oder unabhängig voneinander gilt:
   R⁶, R⁷ = unabhängig voneinander Wasserstoff oder C₁- bis C₅-Alkyl, insbesondere Methyl oder Ethyl;
   R¹¹, R¹², R¹³, R¹⁴, R¹⁵, R¹⁶, R¹⁷, R¹⁸, R¹⁹, R²⁰ = unabhängig voneinander Wasserstoff, C₁- bis C₅-Alkyl, insbesondere Methyl oder Ethyl, oder mit -NHC(O)NR⁶R⁷ substituiertes C₁- bis C₅-Alkyl, insbesondere mit -NHC(O)NR⁶R⁷ substituiertes Methyl oder Ethyl,
wobei ein Rest R¹¹, R¹², R¹³, R¹⁴, R¹⁵, R¹⁶, R¹⁷, R¹⁸, R¹⁹ oder R²⁰ mit -NHC(O)NR⁶R⁷ substituiertes C₁- bis C₅-Alkyl bedeutet,
wobei für Formel (VII) gilt: 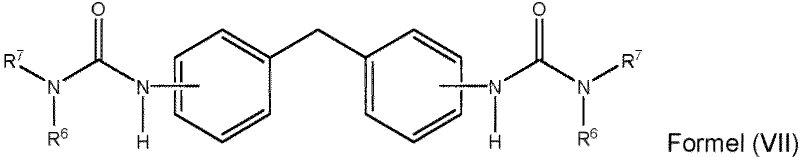
und wobei für die Reste R⁶, R⁷ unabhängig voneinander gilt:
   - R⁶, R⁷ =: unabhängig voneinander Wasserstoff oder C₁- bis C₅-Alkyl, insbesondere Methyl oder Ethyl,
und wobei die Epoxidharz-Zusammensetzung neben dem Härter der allgemeinen Formel (V), oder Formel (VI) oder Formel (VII) keine weiteren Härter, Co-Härter, Härtungsbeschleuniger oder andere Katalysatoren zur Härtung von Epoxidharzen umfasst.

Gemäß einem weiterführenden Gedanken ist somit auch eine Epoxidharz-Zusammensetzung, insbesondere eine flüssige Epoxidharz-Zusammensetzung, Gegenstand der vorliegenden Erfindung, die aus mindestens einem Epoxidharz, insbesondere mindestens einem flüssigen Epoxidharz, und einem Härter zur Härtung des Epoxidharzes sowie mindestens einer Boronsäure der allgemeinen Formel (I) besteht, wobei der Härter aus mindestens einem Harnstoffderivat gemäß Formel (V) oder Formel (VI) oder Formel (VII) besteht.

Erfindungsgemäß umfasst die Epoxidharz-Zusammensetzung wenigstens ein Epoxidharz, insbesondere ein flüssiges Epoxidharz. Vorzugsweise ist das Epoxidharz oder das flüssige Epoxidharz ein Polyether mit mindestens einer, vorzugsweise mindestens zwei Epoxidgruppen und noch weiter bevorzugt mit mindestens drei Epoxidharzgruppen. Diese Epoxidharze oder flüssigen Epoxidharze können mindestens eine, vorzugsweise mindestens zwei Epoxidgruppen aufweisen und dabei gesättigt oder ungesättigt, aliphatisch, cycloaliphatisch, aromatisch oder heterocyclisch sein. Außerdem können diese Epoxidharze oder flüssigen Epoxidharze, Substituenten wie Halogene, Phosphor- und Hydroxyl-Gruppen aufweisen. Bevorzugt werden hierbei Bisphenol-basierte Epoxidharze, insbesondere Bisphenol-A-diglycidylether sowie das mit Brom substituierte Derivat (Tetrabrombisphenol A) oder Bisphenol-F-diglycidylether, Novolak-Epoxidharze, insbesondere Epoxyphenol-Novolak oder aliphatische Epoxidharze eingesetzt. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolaken sowie auf Basis von Anilin oder substituierten Anilinen wie beispielsweise p-Aminophenol oder 4,4'-Diaminodiphenylmethane sind besonders bevorzugt. Ganz besonders bevorzugt sind Epoxidharze auf Basis Glycidylpolyether von 2,2-Bis(4-hydroxyphenyl)-propan (Bisphenol A) sowie Epoxidharze auf Basis Glycidylpolyether von 2,2-Bis(4-hydroxyphenyl)methan (Bisphenol F).

Weiter bevorzugt können gemäß der vorliegenden Erfindung solche Epoxidharze, insbesondere flüssige Epoxidharze eingesetzt werden die einen EEW-Wert im Bereich von EEW = 100 bis 1500 g/eq, insbesondere im Bereich von EEW = 100 bis 1000 g/eq, insbesondere im Bereich von EEW = 100 bis 600 g/eq, weiter bevorzugt im Bereich im Bereich von EEW = 100 bis 400 g/eq und ganz besonders bevorzugt im Bereich von EEW = 100 bis 300 g/eq, aufweisen.

Durch den Zusatz weiterer, handelsüblicher Additive, wie sie dem Fachmann zur Härtung von Epoxidharzen bekannt sind, kann das Härtungsprofil der erfindungsgemäßen Formulierungen variiert werden.

Üblicherweise werden in Prepreg-, Towpreg-, und Klebstoff-Formulierungen Reaktivverdünner und thermoplastische Additive eingesetzt. So kann die erfindungsgemäße Epoxidharz-Zusammensetzung neben dem Epoxidharz, dem Härter und der Boronsäure auch einen Reaktivverdünner und/oder ein thermoplastisches Additiv enthalten.

Als Reaktivverdünner können in dem erfindungsgemäßen Verfahren bzw. in der Epoxidharz-Matrix insbesondere Glycidylether zum Einsatz gebracht werden. Dabei können weiter bevorzugt monofunktionelle, di-, sowie polyfunktionelle Glycidylether eingesetzt werden. Hier sind insbesondere Glycidylether, Diglycidylether, Triglycidylether, Polyglycidylether und Multiglycidylether und deren Kombinationen zu nennen. Besonders bevorzugt können Glycidylether aus der Gruppe umfassend 1,4-Butandiol-Diglycidylether, Trimethylolpropan-Triglycidylether, 1,6-Hexandiol-Diglycidylether, Cyclohexandimethanol-Diglycidylether, C₈-C₁₀-Alkohol-Glycidylether, C₁₂-C₁₄-Alkohol-Glycidylether, Kresol-Glycidylether, Poly(tetramethylen-oxid)-Diglycidylether, 2-Ethylhexyl-Glycidylether, Polyoxypropylenglycol-Diglycidylether, Polyoxypropylenglycol-Triglycidylether, Neopentylglykol-Diglycidylether, p-tert-Butylphenol-Glycidylether, Polyglycerol-Multiglycidylether, sowie deren Kombinationen eingesetzt werden.

Ganz besonders bevorzugte Glycidylether sind 1,4-Butandiol-Diglycidylether, Trimethylolpropan-Triglycidylether, Neopentylglykol-Diglycidylether, 1,6-Hexandiol-Diglycidylether, Cyclohexandimethanol-Diglycidylether sowie deren Kombinationen.

Typischerweise werden thermoplastische Additive aus der Gruppen der Phenoxyharze, Acrylat-, Acryl-, Acrylonitril-, Polyetherimide-, Polyetherketon-, oder Polysulfonpolymere gewählt. Auf Grund deren positiven Einfluss auf das Fliessverhalten bei der Verarbeitung, und die mechanischen Eigenschaften des gehärteten Bauteils, kommen bevorzugt Phenoxyharze, Polyacrylate, oder Polysulfone zum Einsatz.

Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Füllstoffe, Rheologieadditive wie Thixotropierungsmittel oder Dispergieradditive, Defoamer, Farbstoffe, Pigmente, Zähmodifikatoren, Schlagzähverbesserer, Nano-Füllstoffe, Nano-Faser, oder Brandschutzadditive.

Die einzusetzenden Mengen an erfindungsgemäßen Boronsäuren sowie den Härtern in den Epoxidharz-Zusammensetzungen können gemäß der vorliegenden Erfindung in Bezug auf die einzusetzende Menge an Epoxidharzen abgestimmt werden. Bevorzugt können bezogen auf 100 Gewichtsteile Epoxidharz insbesondere 0,05 bis 3,0 Gewichtsteile Boronsäure gemäß Formel (I), weiter bevorzugt 0,1 bis 2,0 Gewichtsteile Boronsäure gemäß Formel (I) und besonders bevorzugt 0,1 bis 1,0 Gewichtsteile Boronsäure gemäß Formel (I) eingesetzt werden.

Weiterhin können bezogen auf 100 Gewichtsteile Epoxidharz insbesondere 1 bis 15 Gewichtsteile Härter, insbesondere aus der Gruppe der Härter gemäß Formel (III) oder Formel (V) oder Formel (VI) oder Formel (VII), eingesetzt werden. Weiter bevorzugt können gemäß der vorliegenden Erfindung mindestend 2 Gewichtsteile Härter, weiter bevorzugt mindestend 3, weiter bevorzugt mindestens 4, noch weiter bevorzugt mindestens 5 und ganz besonders bevorzugt mindestens 6 Gewichtsteile Härter, jeweils bezogen auf 100 Gewichtsteile Epoxidharz, und unabhängig hiervon weiter bevorzugt höchstens 14 Gewichtsteile Härter, weiter bevorzugt höchstens 13 Gewichtsteile, weiter bevorzugt höchstens 12 Gewichtsteile, noch weiter bevorzugt höchstens 11 Gewichtsteile und ganz besonders bevorzugt höchstens 10 Gewichtsteile Härter, jeweils bezogen auf 100 Gewichtsteile Epoxidharz eingesetzt werden.

Somit umfasst eine erfindungsgemäße Epoxidharz-Zusammensetzung bevorzugt bezogen auf 100 gewichtsteile Epoxidharz insbesondere 4 bis 12 Gewichtsteile Härter, und ganz besonders bevorzugt 6 bis 10 Gewichtsteile Härter, insbesondere aus der Gruppe der Härter gemäß Formel (III) oder Formel (V) oder Formel (VI) oder Formel (VII).

Dabei kann die Epoxidharz-Zusammensetzung bevorzugt den Härter und die Boronsäure in einem Gewichtsverhältnis Härter zu Boronsäure umfassen, das einem Verhältnis im Bereich 1 : 1 bis 300 : 1, weiter bevorzugt von 2 : 1 bis 120 : 1 und besonders bevorzugt von 6 : 1 bis 100 : 1, entspricht.

Die hierin beschriebenen Epoxidharz-Zusammensetzungen können wie bereits erwähnt über einen relativ langen Zeitraum gelagert werden, ohne dass eine Härtung beobachtet wird. Zudem weisen diese Epoxidharz-Zusammensetzungen ein Härtungsprofil auf, das einen großen Einsatzbereich erlaubt. Erfindungsgemäße Epoxidharze sind jedoch besonders geeignet, in Faserverbundwerkstoffen eingesetzt zu werden.

Somit ist auch die Verwendung einer Epoxidharz-Zusammensetzung der hierin beschriebenden Art zur Herstellung eines Faserverbundwerkstoffs, Prepregs und Towpregs Gegenstand der vorliegenden Erfindung.

Faserverbundwerkstoffe wie Prepregs oder Towpregs zeichnen sich dadurch aus, dass sie vorimprägnierte und teilausgehärtete Faserverbunde aus einem Epoxidharz und Fasern darstellen. Diese teilausgehärteten Werkstoffe befinden sich in einem sogenannten B-stage, einem teilausgehärteten Zustand. Da in diesem Zustand die entsprechende Epoxidharz-Zusammensetzung nur teilausgehärtet ist, kann weiterhin eine voranschreitende Aushärtung des Epoxidharzes erfolgen. Bei Epoxidharz-Formulierungen auf Basis von Epoxidharz-Uron-Mischungen, können entsprechende Faserverbundwerkstoffe wie Prepregs und Towpregs bei Raumtemperatur weiter reagieren und somit die gewünschten Eigenschaften und die Qualität der Faserverbundwerkstoffe negativ beeinflussen. Somit ist eine Lagerung bei Raumtemperatur über einen größeren Zeitraum nicht möglich. Um eine ausreichende Lagerstabilität von Faserverbundwerkstoffen wie Prepregs oder Towpregs zu gewährleisten, müssen diese bei kontrollierten, niedrigen Temperaturen, oft bei -18 °C, gelagert werden. Das führt zu erheblichen Zusatzkosten und großem Aufwand bei Lagerung, Transport und bei der Verarbeitung von Prepregs und Towpregs. Daher ist es von Vorteil, wenn die verwendete Epoxidharz-Zusammensetzung eine hohe Latenz garantiert, um die Lagerbedingungen von Faserverbundwerkstoffe wie Prepregs und Towpregs zu Gunsten der Eigenschaften und der Qualität zu verlängern. Erfindungsgemäße Epoxidharz-Zusammensetzungen weisen in besonderem Maß eine hohe Latenz auf. Somit sind erfindungsgemäße Epoxidharz-Zusammensetzungen der hierin beschriebenen Art in besonderem Maß geeignet diese Problemstellung zu lösen.

Ebenso ist auch der Faserverbundwerkstoff selbst Gegenstand der vorliegenden Erfindung, der umfasst:
a) ein Trägermaterial, insbesondere Verstärkungsfasern, und
b) eine erfindungsgemäße Epoxidharz-Zusammensetzung.

Faserverbundwerkstoffe, insbesondere Prepregs und Towpregs, finden für die Fertigung von Faserverbundbauteilen in sehr unterschiedlichen Industriezweigen eingesetzt. So werden Faserverbundwerkstoffe beispielsweise in der Automobilindustrie zur Herstellung von Innenverkleidungen oder Kotflügeln oder in der Luft und Raumfahrtindustrie für verschiedenste Bauteile eingesetzt. Zudem werden Faserverbundwerkstoffe zur Herstellung von Sport- und Freizeit-Geräten, wie beispielsweise Tennisschläger oder Fahrradrahmen, sowie zur Fertigung von Rotorblätter für den Windkraftanlagen verwendet. Für diese Faserverbundwerkstoffe können alle den Fachmann bekannten Fasertypen eingesetzt werden. So werden beispielsweise Glas-, Carbon-, Aramid-, Kunststoff-, Basalt-, und Naturfasern, oder Steinwolle eingesetzt. Diese Faserverbundwerkstoffe können in Verarbeitungsverfahren wie zum Beispiel, Autoklaven, "Out-Of-Autoclave", Vakuumsack und Pressverfahren verarbeitet werden.

Hinsichtlich der Auswahl der zu verwendenden Trägermaterialien können somit gemäß der vorliegenden Erfindung insbesondere Verstärkungsfasern, weiter bevorzugt Verstärkungsfasern ausgewählt aus der Gruppe Kohlenstofffasern, Glasfasern, Aramidfaser und Basaltfaser, eingesetzt werden.

Diese Verstärkungsfasern können weiter bevorzugt in Form von Filamenten, Fäden, Garnen, Geweben, Geflechten oder Gewirken bereitgestellt oder eingesetzt werden.

Des Weiteren können auch Verstärkungsfasern aus Siliciumcarbid, Aluminiumoxid, Graphit, Wolframcarbid, Bor ausgewählt werden. Des Weiteren können auch Verstärkungsfasern ausgewählt werden aus der Gruppe der Naturfasern wie Samenfasern (z.B. Kapok, Baumwolle), Bastfasern (z.B. Bambus, Hanf, Kenaf, Flachs) oder Blattfaser (wie Henequen, Abac) eingesetzt werden. Ebenso können auch Kombinationen aus diesen Verstärkungsfasern als Trägermaterial verwendet werden.

Die hierin beschriebenen Epoxidharz-Zusammensetzungen können wie bereits erwähnt über einen relativ langen Zeitraum gelagert werden, ohne dass eine Härtung beobachtet wird. Zudem weisen diese Epoxidharz-Zusammensetzungen ein Härtungsprofil auf, das einen großen Einsatzbereich erlaubt. Erfindungsgemäße Epoxidharze sind daher auch besonders geeignet, in 1K-Klebstoffen (1-Komponenten-Klebstoffe) und Akustik-Dämmstoffen eingesetzt zu werden. Diese Klebstoffe und Dämmstoffe finden ihre Anwendung beispielsweise im Automobil- und Flugzeugbau.

Somit ist auch die Verwendung einer Epoxidharz-Zusammensetzung der hierin beschriebenden Art zur Herstellung eines 1K-Klebstoffs oder eines Akustik-Dämmstoffs Gegenstand der vorliegenden Erfindung.

Eine große Anzahl an Klebstoffen oder Akustik-Dämmstoffen auf Basis von 1K-Epoxidharz-Zusammensetzungen liegen für die Anwendung in einem flüssigen, mittelviskosen bis hochviskosen Zustand vor. Im industriellen Maßstab müssen Diese vor Gebrauch auf eine entsprechende Verarbeitungstemperatur gebracht werden. Da bei einer bevorzugt vollkontinuierlichen Massenproduktion mit Fass-Ware gearbeitet wird, muss der darin befindliche Klebstoff oder Akustik-Dämmstoff mit Hilfe von Fass-Heizmatten, oft aber mit Hilfe einer Schmelzplatte einer Fass-Schmelzanlage verarbeitet werden. Gerade durch die Zuhilfenahme einer Schmelzplatte, welche am Stempel der Fass-Schmelzanlage angebracht ist, wird die Epoxidharzzusammensetzung thermisch besonders beansprucht. Da für die Beförderung des angeschmolzenen, epoxidharzbasierten Klebstoffs oder Akustik-Dämmstoffs der Stempel gegen das Epoxidharz gepresst werden muss, entstehen durch den Druck des Stempels auf den Fassinhalt zusätzlich Scherkräfte, welche das Epoxidharz weiter lokal stark erwärmen. Das geschmolzene Harz muss so durch einen am Stempel aufgebrachten, kleinen Schlauchanschluss befördert werden, welches für gewöhnlich zu einem Auftragskopf oder Montagepistole oder Schmelzgerät führt. Diese druck- und temperaturintensive Beanspruchung hat einen negativen Einfluss auf die Topfzeit und führt zur Herabsetzung der Latenz der Epoxidharzzusammensetzung. Dadurch kann die Eigenschaft des Klebstoffs oder Akustik-Dämmstoffs herabgesetzt werden. Daher ist es von Vorteil, wenn die verwendete Epoxidharz-Zusammensetzung für Klebstoffe und Akustik-Dämmstoffe eine hohe Latenz garantiert, um eine hohe Latenzverlängerung bei Beanspruchung, aber auch bei der Lagerung, des Materials zu Gunsten der Klebe- und Dämm-Eigenschaften und somit der Qualität zu garantieren. Somit sind erfindungsgemäße Epoxidharz-Zusammensetzungen der hierin beschriebenden Art in besonderem Maß geeignet diese Problemstellung zu lösen.

### Beispiele

### Verwendete Materialien

Produktname: EPIKOTE^{™} Resin 828 (Hexion Inc.)
Unmodifiziertes Bisphenol A Epoxidharz (EEW = 184 - 190 g/eq)
(Viskosität bei 25°C = 12 - 14 Pa*s)
Harnstoff 1: 1,1'-(4-Methyl-m-phenylen)-bis-(3,3-dimethylharnstoff) (AlzChem Trostberg GmbH)
bifunktioneller Härter gemäß Formel V, Feststoff (Partikelgröße 98% ≤ 10 µm)
Harnstoff 2: 1,1'-(Methylendi-p-phenylen)bis[3,3-dimethylharnstoff] (AlzChem Trostberg GmbH)
bifunktioneller Härter gemäß Formel VII, Feststoff
Harnstoff 3: N'-[3-[[[(dimethylamino)carbonyl]amino]methyl]-3,5,5-trimehtylcyclohexyl]-N,N-dimethyl-Harnstoff (AlzChem Trostberg GmbH)
bifunktioneller Härter gemäß Formel VI, Feststoff
Produktname: 3-Fluorphenylboronsäure; (abcr GmbH)
Feststoff, (Schmelzpunkt = 220°C)
Produktname: 2,5-Dimethoxyphenylboronsäure; (Alfa Aesar)
Feststoff (Reinheit = 98%; Schmelzpunkt = 92 - 94°C)
Produktname: 1-Octylboronsäure; (Alfa Aesar)
Feststoff (Reinheit = 97%; Schmelzpunkt = 81 - 85°C)
Produktname: 1,4-Benzendiboronsäure (Alfa Aesar)
Feststoff (Reinheit = 96%; Schmelzpunkt >300°C)
Produktname: Toray T700 16500d 24k
Unidirektionale Carbonfaser (Flächengewicht 314 g/m²)

### Herstellung der Mischungen

Für die Untersuchungen der in den Beispielen genannten Rezepturen werden die Einzelkomponenten der jeweiligen Rezeptur in eine Reibschale für mehrere Minuten bis zur Homogenität vermischt. Die in den Tabelle 1 gelisteten Formulierungen sind dazu auf 10 g Epoxidharz umgerechnet worden.

### Herstellung der Faserverbundwerkstoffe und deren Prüfkörper

Zur Herstellung der Faserverbundwerkstoffe werden sechs Lagen der Carbonfaser Toray T700 16500d 24k auf 15 cm mal 13 cm zugeschnitten. In einer Reibschale werden die Einzelkomponenten der jeweiligen Rezeptur für mehrere Minuten bei 40°C bis zur Homogenität vermischt. Die in den Tabelle 2 gelisteten Formulierungen sind dazu auf 100 g Epoxidharz umgerechnet worden. Die Carbonfasern werden unidirektional übereinandergestapelt und mit der Formulierung handlaminiert.

Die Härtung der imprägnierten Fasern erfolgt zwischen zwei Aluminiumplatten für 2h bei 120°C. Die Rezepturen Ref.4 und K wurden für 2h bei 120°C und 1h bei 130°C ausgehärtet. Nach der Härtung werden die Faserverbundwerkstoffe aus den Aluminiumplatten entformt. Anschließend werden aus den Faserverbundwerkstoffen die entsprechenden Prüfkörper für die Messung der Glasübergangstemperatur mittels Dynamisch Mechanischer Thermo-Analyse (DMTA-Tg), angelehnt an EN ISO 11357-1 und ASTM D 4065, der mechanischen Messung der interlaminaren Scherfestigkeit (ILSS), angelehnt an EN ISO 14130 und der mechanischen Messung der Biegeeigenschaften mittels 3-Punkt-Biegeversuch, angelehnt an EN ISO 14125, herausgeschnitten:

**Tabelle A: Prüfkörperdimensionen der Faserverbundwerkstoffe für entsprechende Messungen**

| Prüfverfahren | Länge Prüfkörper [mm] | Breite Prüfkörper [mm] | Höhe Prüfkörper [mm] |
|---|---|---|---|
| 3-Punkt-Biegeversuch | 100 | 15 | 2,4 |
| DMTA-Tg | 40 | 10 | 2,4 |
| ILSS | 20 | 10 | 2,4 |

### Verwendete Methoden zur Charakterisierung der Zusammensetzungen

### DSC-Untersuchunaen

DSC-Messungen werden an einem dynamischen Wärmestromdifferenz-Kalorimeter DSC 1 oder DSC 3 (Mettler Toledo) durchgeführt.

### a) Tg-Bestimmung:

Für die Bestimmung der maximalen Glasübergangstemperatur (End-Tg) wird eine Probe der ausgehärteten Formulierung folgendem DSC-Temperaturprogramm unterworfen: Aufheizen von 30 - 200 °C mit 20 K/min, 10 min Halten bei 200 °C, Abkühlen von 200 - 50 °C mit 20 K/min, 5 min Halten bei 50 °C, Aufheizen von 50 - 200 °C mit 20 K/min, 10 min Halten bei 200 °C, Abkühlen von 200 - 50 °C mit 20 K/min, 5 min Halten bei 50 °C, Aufheizen von 50 - 220 °C mit 20 K/min. Aus den beiden letzten Aufheizzyklen wird jeweils durch Anlegen einer Tangente im Wendepunkt der größten Änderung der Wärmekapazität (ΔCp) die Glasübergangstemperatur bestimmt und der Mittelwert als End-TG angegeben.

### b) Isotherme DSC:

Eine Probe der Formulierung wird bei der angegebenen Temperatur für die angegebene Zeit konstant gehalten (isotherme Härtung der Formulierung). Die Auswertung erfolgt durch Bestimmung der Zeit des 90 %-Umsatzes (als Maß für das Ende des Aushärtevorgangs) des exothermen Reaktionspeaks.

### c) Latenz:

Zur Ermittlung der Latenz (Lagerstabilität) werden ca. 10 g der jeweiligen Formulierung frisch zubereitet und danach bei Temperatur von 40 °C in einem Wärmeschrank gelagert. Durch regelmäßiges Messen der dynamischen Viskosität wird die fortschreitende Vernetzung (Härtung) der Formulierung unter diesen Lagerungsbedingungen erfasst. Die Bestimmung der dynamischen Viskosität erfolgt mit einem Haake-Viskosimeter [Kegel (1 °)-Platte-Methode, Messung bei 25 °C, Scherrate 5,0 s-1]. Eine Formulierung wird bis zur Verdopplung der Viskosität als lagerstabil (noch zur Verarbeitung geeignet) eingestuft.

### Mechanische-Untersuchungen

Messungen der interlaminaren Scherfestigkeit (ILSS) und der Biegeeigenschaften (3-Punkt-Biegversuch) der Faserverbundwerkstoffe werden an einer Materialprüfmaschine Zwick Z010 durchgeführt. Die Auswertung der Messergebnisse erfolgt mit der Software testXpertll.

### a) ILSS (EN ISO 14130):

Die Prüfkörper der Faserverbundwerkstoffe werden mit einer Prüfgeschwindigkeit von 1 mm/min gemessen. Der Radius der Druckfinne beträgt 5 mm, der Radius der Auflager 2 mm. Die Stützweite (Abstand zwischen den beiden Auflagern) beträgt L = 10 mm.

### b) 3-Punkt-Biegeversuch (EN ISO 14125):

Die Prüfkörper der Faserverbundwerkstoffe werden mit einer Prüfgeschwindigkeit von 1 mm/min gemessen. Der Radius der Druckfinne beträgt 5 mm, der Radius der Auflager 2 mm. Die Stützweite (Abstand zwischen den beiden Auflagern) beträgt L = 80 mm.

### Dynamisch Mechanische Thermo-Analyse

DMTA-Messungen werden mit Hilfe des Modular Compact Rheometer MCR 302 mit Convection Heating System CTD 450 von Anton Paar, Analysen mit Hilfe der Software RHEOPLUS/32 von Anton Paar durchgeführt.

### a) DMTA-Tg (EN ISO 11357-1 und ASTM D 4065):

Für die Bestimmung der Glasübergangstemperatur im Faserverbundwerkstoff wird die Probe 30 Minuten einer oszillierenden Deformation von 0,01% bei einer Frequenz von 1 Hz ausgesetzt. Die Probe wird dabei von 50 - 200 °C mit 5 K/min aufgeheizt. Die Normalkraft beträgt -0,5 N. Als Glasübergangstemperatur wird der Midpoint-Tg der Probe angegeben.

### Carbonfaser Anteil

Der Carbonfaser Anteil des Faserverbundwerkstoffs wird in Massenanteilen angegeben. Hierbei wird die Masse der Carbonfaser und die Masse der daraus hergestellten Faserverbundwerkstoffe ermittelt und daraus der Quotient gebildet.

### Auflistung der Ergebnisse

**Tabelle 1a: Latenz der Epoxidharz-Zusammensetzungen im Vergleich**

| **Rezepturen** | **Ref.1** | **A** | **B** | **C** | **D** |
|---|---|---|---|---|---|
| EPIKOTE^{™} Resin 828 | 100 | 100 | 100 | 100 | 100 |
| Harnstoff 1 | 8,0 | 8,0 | 8,0 | 8,0 | 8,0 |
| 1-Octylboronsäure | | 0,4 | | | |
| 1,4-Benzendiboronsäure | | | 0,4 | | |
| 3-Fluorphenylboronsäure | | | | 0,4 | |
| 2,5-Dimethoxyphenylboronsäure | | | | | 0,4 |

| **Dynamischer DSC** | | | | | |
|---|---|---|---|---|---|
| End-Tg [°C] | 98 | 96 | 100 | 98 | 98 |

| **Isotherme DSC; 1 Std. bei 140°C** | | | | | |
|---|---|---|---|---|---|
| Zeit bis 90 % Umsatz [min] | 25 | 26 | 26 | 27 | 24 |
| Latenz bei 40 °C [Tage] | 3 | 18 | 37 | 28 | 26 |

**Tabelle 1b: Latenz der Epoxidharz-Zusammensetzungen im Vergleich**

| **Rezepturen** | **Ref.2** | **E** | **F** | **G** | **H** |
|---|---|---|---|---|---|
| EPIKOTE^{™} Resin 828 | 100 | 100 | 100 | 100 | 100 |
| Harnstoff 2 | 8,0 | 8,0 | 8,0 | 8,0 | 8,0 |
| 1-Octylboronsäure | | 0,4 | | | |
| 1,4-Benzendiboronsäure | | | 0,4 | | |
| 3-Fluorphenylboronsäure | | | | 0,4 | |
| 2,5-Dimethoxyphenylboronsäure | | | | | 0,4 |

| **Dynamischer DSC** | | | | | |
|---|---|---|---|---|---|
| End-Tg [°C] | 101 | 99 | 102 | 101 | 102 |

| **Isotherme DSC; 1 Std. bei 140°C** | | | | | |
|---|---|---|---|---|---|
| Zeit bis 90 % Umsatz [min] | 40 | 40 | 42 | 42 | 43 |
| Latenz bei 40 °C [Tage] | 8 | 67 | >96^{a)} | 95 | 93 |

| | | | | | |
|---|---|---|---|---|---|
| ^{a)} Nach 96 Tagen wird für Formulierung F eine 1,6-fache Erhöhung der Viskosität erreicht. | | | | | |

### Beschreibung und Wertung der Ergebnisse aus Tabelle 1a und Tabelle 1b

Der Vergleich der erfindungsgemäßen Beispiele A bis D mit der Ref. 1 und der erfindungsgemäßen Beispiele E bis H mit der Ref. 2, jeweils bestehend aus einem Uron-basierten Härter in einem handelsüblichen Epoxidharz, zeigt, dass bei der Verwendung der erfindungsgemäßen Boronsäuren vergleichbare, charakteristische Werte für den Aushärtevorgang ermittelt werden können. Dies lässt sich anhand der Werte aus der DSC-Analyse feststellen, darunter durch Bestimmung des End-Tg und der Aufnahme einer isothermen DSC bei 140 °C zur Ermittlung des 90 %-igen Umsatzes der Härtung. Die Latenzmessung bestätigt, dass durch Zugabe der erfindungsgemäßen Boronsäuren, der Beispiele A bis D und E bis H, die Latenz bei 40 °C verlängert werden kann. Für die Beispiele A bis D im Vergleich zu Ref. 1 ergibt sich eine Erhöhung der Latenz um den Faktor 6 bis 12. Für die Beispiele E bis H im Vergleich zu Ref. 2 ergibt sich eine Erhöhung der Latenz um den Faktor 8 bis 12 bzw. über einen Faktor von 12 hinaus. So zeigt das Ergebnis aus der Latenzmessung des Beispiels F, dass die Verdoppelung der Viskosität im angesetzten Messzeitraum noch nicht erreicht wurde. Für das Beispiel F ergibt sich eine 1,6-fache Erhöhung der Viskosität bei Abbruch der Messung nach 96 Tagen. Da Ref. 2 nach 6 Tagen eine 1,6-fache Erhöhung der Viskosität erzielt, ergibt sich für die Formulierung F eine Erhöhung der Latenz um einen Faktor von 16.

Somit zeigt der Vergleich der Rezeptur Ref. 1 und den Rezepturen A bis D sowie der Vergleich der Rezeptur Ref. 2 und den Rezepturen E bis H, dass mit Hilfe der erfindungsgemäßen Boronsäuren epoxidharzbasierte Prepregs, Towpregs sowie auch Klebstoffe eine verlängerte Latenz über 18 Wochen bei 40 °C erzielen können, bei unveränderten Aushärteeigenschaften. Für den Fachmann, Hersteller und Anwender von Prepregs, Towpregs und Klebstoffen und Akustik-Dämmstoffe, bedeutet dies eine einfachere Handhabung dieser Produkte, sodass diese ohne Kühlung gelagert, transportiert und verarbeitet werden können. Für Produkte gemäß den entsprechend genannten Rezepturen A bis H, basierend auf den erfindungsgemäßen Boronsäuren, ergibt sich eine über 16-fach längere Haltbarkeit und Lagerfähigkeit, allen voran für Prepregs, Towpregs und Klebstoffen. Dies kann zu weniger Ausschussware, weniger Abfälle und somit zur Kostenreduzierung führen. Dadurch wird der Verbrauch an teuren Rohstoffen wie der Carbonfaser reduziert und die Umwelt geschont.

**Tabelle 2: Mechanische und dynamisch mechanische Eigenschaften der Faserverbundwerkstoffe im Vergleich**

| **Rezepturen** | **Ref.3** | **I** | **Ref.4** | **K** |
|---|---|---|---|---|
| EPIKOTE^{™} Resin 828 | 100 | 100 | 100 | 100 |
| Harnstoff 1 | 8,0 | 8,0 | | |
| Harnstoff 3 | | | 8,0 | 8,0 |
| 1,4-Benzendiboronsäure | | 0,4 | | |
| 1-Octylboronsäure | | | | 0,2 |
| **Carbonfaser Anteil [%]** | 56 | 56 | 56 | 55 |

| **DMTA-Tg** | | | | |
|---|---|---|---|---|
| Tg Midpoint [°C] | 117 | 120 | 118 | 118 |

| **Interlaminare Scherfestigkeit** | | | | |
|---|---|---|---|---|
| ILSS [MPa] | 63 | 65 | 59 | 60 |

| **Biegeeigeschaften** | | | | |
|---|---|---|---|---|
| Biegemodul [GPa] | 77 | 75 | 72 | 76 |
| Biegefestigkeit [MPa] | 972 | 940 | 844 | 876 |
| Bruchdehnung [%] | 1,2 | 1,2 | 1,1 | 1,1 |

### Beschreibung und Wertung der Ergebnisse aus Tabelle 2

Der Vergleich der erfindungsgemäßen Beispiele I mit der Ref.3 und K mit der Ref.4 zeigen auf, dass es zu keiner Beeinflussung in den dynamisch mechanischen und den mechanischen Eigenschaften der Faserverbundwerkstoffe durch Nutzung der erfindungsgemäßen Epoxidharz-Zusammensetzung kommt. Der ermittelte Tg-Midpoint der erfindungsgemäßen Beispiele I im Vergleich zu Ref.3 und K im Vergleich zu Ref.4 ist jeweils in einem gleichbleibenden, identischen Wertebereich. Ein Einfluss der erfindungsgemäßen Epoxidharz-Zusammensetzung ist hierbei nicht zu erkennen. In den mechanischen Eigenschaften der unidirektionalen, handlaminierten Faserverbundwerkstoffe können typische Wertebereiche ermittelt werden. Die Biegemodule und die Biegefestigkeiten der jeweiligen Vergleichsproben bestätigt ebenso das Ausbleiben von Eigenschaftsänderungen durch die erfindungsgemäße Epoxidharz-Zusammensetzung. Die Werte für die Bruchdehnung sind jeweils im gleichen Wertebereich. Die interlaminare Scherfestigkeit, welche die gleiche Belastungsfähigkeit beim Abscheren der Schichten des Faserverbundwerkstoffs wiederspiegelt, zeigen keine signifikanten Veränderungen des Faserverbundwerkstoffs. Daher ist auch in den mechanischen Eigenschaften keine signifikante Beeinflussung der erfindungsgemäßen Epoxidharz-Zusammensetzung festzustellen.

Somit zeigt der Vergleich der Rezeptur Ref. 3 und I sowie der Vergleich der Rezeptur Ref. 4 und K, dass die erfindungsgemäßen Boronsäuren in Faserverbundwerkstoffen von epoxidharzbasierte Prepregs und Towpregs keine Änderungen in den End-Eigenschaften für Faserverbundbauteile haben. Weiterhin bleibt auch für Faserverbundwerkstoffe wie Prepregs und Towpregs eine verlängerte Latenz über 18 Wochen bei 40 °C bestehen, sodass der Fachmann, Hersteller und Anwender von Prepregs und Towpregs eine gleichbleibende Faserverbundwerkstoffqualität erhält. Zudem zeigt die Herstellung der Faserverbundwerkstoffe, dass auch bei der Nutzung der erfindungsgemäßen Boronsäure der Herstellprozess des Faserverbundwerkstoffs nicht verändert oder neu ausgelegt werden muss, da sich die Endeigenschaften für daraus folgende Bauteile nicht ändern.

## Patentansprüche

1. Verwendung von Boronsäuren der allgemeinen Formel (I) zur Erhöhung der Lagerstabilität von Epoxidharz-Zusammensetzungen umfassend ein Epoxidharz und einen Härter zur Härtung des Epoxidharzes, wobei für Formel (I) gilt: 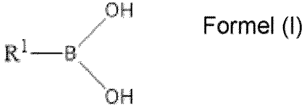
wobei für den Rest R¹ gilt:
R¹ = Alkyl, Hydroxyalkyl oder ein Rest der Formel (II), wobei für Formel (II) gilt: 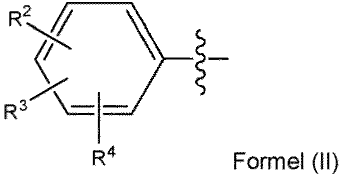
wobei für R², R³, R⁴ unabhängig voneinander gilt und mindestens ein Rest R², R³,
R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl oder B(OH)₂,
wobei die Epoxidharz-Zusammensetzung als Härter einen Härter gemäß Formel (III) umfasst, wobei für Formel (III) gilt: 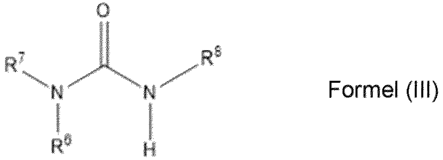
wobei für R⁶, R⁷, R⁸ unabhängig voneinander gilt:
R⁶, R⁷ = unabhängig voneinander Wasserstoff oder C₁- bis C₅-Alkyl,
R⁸ = mit -NHC(O)NR⁶R⁷ substituiertes C₁- bis C₁₅-Alkyl, mit -NHC(O)NR⁶R⁷ substituiertes C₃- bis C,s-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keinen Härter aus der Gruppe Cyanamid, Guanidine, Cyanoguanidine, Nitroguanidine, Acylguanidine, Biguanidine sowie keinen Härter gemäß allgemeiner Formel (IV) umfasst, wobei für Formel (IV) gilt 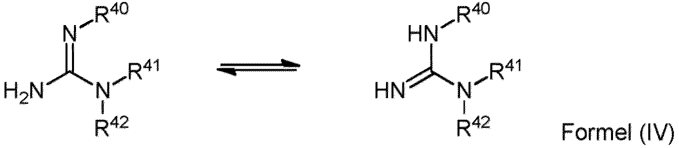
wobei für die Reste R⁴⁰, R⁴¹, R⁴² unabhängig voneinander gilt:
R⁴⁰ = Cyano, Nitro, Acyl oder ein Rest der Formel -(C=X)-R⁴³, mit
X = Imino oder Sauerstoff,
R⁴³ = Amino, Alkylamino oder Alkoxy,
R⁴¹ = Wasserstoff, C₁- bis C₅-Alkyl, Aryl, Benzyl, oder Acyl,
R⁴² = Wasserstoff oder C₁- bis C₅-Alkyl.

2. Verwendung nach Anspruch 1, **dadurch gekennzeichnet, dass** der Rest R¹ in Formel (I) bedeutet:
R¹ = Methyl, Ethyl, n-Propyl, 1-Methylethyl, n-Butyl, 1-Methylpropyl, 2-Methylpropyl, n-Pentyl, n-Hexyl, n-Heptyl, n-Octyl, n-Nonyl, n-Decanyl, Hydroxymethyl, 2-Hydroxyethyl, 3-Hydroxypropyl, 4-Hydroxybutyl oder 5-Hydroxypentyl.

3. Verwendung nach Anspruch 1, **dadurch gekennzeichnet, dass** R¹ in Formel (I) einen Rest der Formel (II) bedeutet, wobei für die Reste R², R³, R⁴ gilt:
R² = Fluor, Chlor, Brom, lod, Cyano, C₁- bis C₅-Alkyl, Alkoxy, Acyl, Alkylsulfonyl, Aryl, Carboxyl oder B(OH)₂,
R³, R⁴ = Wasserstoff.

4. Verwendung nach Anspruch 1, **dadurch gekennzeichnet, dass** R¹ in Formel (I) einen Rest der Formel (II) bedeutet, wobei für die Reste R², R³, R⁴ unabhängig voneinander gilt:
R², R³ = unabhängig voneinander Fluor, Chlor, Brom, lod, Cyano, C₁- bis C₅-Alkyl, Alkoxy, Acyl, Alkylsulfonyl, Aryl, Carboxyl oder B(OH)₂,
R⁴ = Wasserstoff.

5. Verwendung nach Anspruch 1, **dadurch gekennzeichnet, dass** R¹ in Formel (I) einen Rest der Formel (II) bedeutet, wobei für die Reste R², R³, R⁴ unabhängig voneinander gilt:
R², R³, R⁴ = Fluor, Chlor, Brom, lod, Cyano, C₁- bis C₅-Alkyl, Alkoxy, Acyl, Alkylsulfonyl, Aryl, Carboxyl oder B(OH)₂.

6. Epoxidharz-Zusammensetzung umfassend mindestens ein Epoxidharz und einen Härter zur Härtung des Epoxidharzes, **dadurch gekennzeichnet, dass** die Zusammensetzung mindestens eine Boronsäuren der allgemeinen Formel (I) umfasst, wobei für Formel (I) gilt: 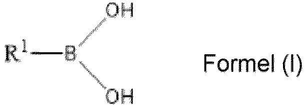
wobei für den Rest R¹ gilt:
R¹ = Alkyl, Hydroxyalkyl oder ein Rest der Formel (II), wobei für Formel (II) gilt: 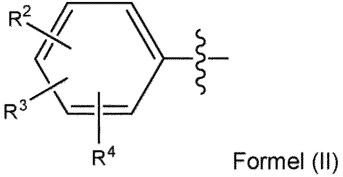
wobei für R², R³, R⁴ unabhängig voneinander gilt und mindestens ein Rest R², R³,
R⁴ ungleich Wasserstoff bedeutet:
R², R³, R⁴ = Wasserstoff, Fluor, Chlor, Brom, lod, Cyano, C₁- bis C₅-Alkyl, Alkoxy, Acyl, Alkylsulfonyl, Aryl, Carboxyl oder B(OH)₂,
wobei die Epoxidharz-Zusammensetzung als Härter einen Härter gemäß Formel (III) umfasst, wobei für Formel (III) gilt: 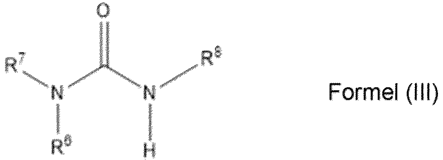
wobei für R⁶, R⁷, R⁸ unabhängig voneinander gilt:
R⁶, R⁷ = unabhängig voneinander Wasserstoff oder C₁- bis C₅-Alkyl,
R⁸ = mit -NHC(O)NR⁶R⁷ substituiertes C₁- bis C₁₅-Alkyl, mit -NHC(O)NR⁶R⁷substituiertes C₃- bis C,s-Cycloalkyl, mit -NHC(O)NR⁶R⁷ substituiertes Aryl oder mit -NHC(O)NR⁶R⁷ substituiertes Alkylaryl,
und wobei die Epoxidharz-Zusammensetzung neben dem Härter der allgemeinen Formel (III) keinen Härter aus der Gruppe Cyanamid, Guanidine, Cyanoguanidine, Nitroguanidine, Acylguanidine, Biguanidine sowie keinen Härter gemäß allgemeiner Formel (IV) umfasst, wobei für Formel (IV) gilt 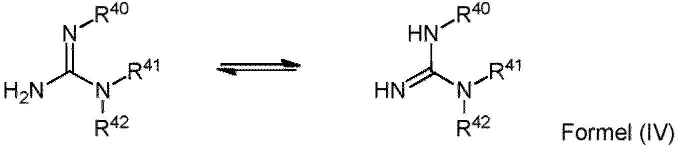
wobei für die Reste R⁴⁰, R⁴¹, R⁴² unabhängig voneinander gilt:
R⁴⁰ = Cyano, Nitro, Acyl oder ein Rest der Formel -(C=X)-R⁴³, mit
X = Imino oder Sauerstoff,
R⁴³ = Amino, Alkylamino oder Alkoxy,
R⁴¹ = Wasserstoff, C₁- bis C₅-Alkyl, Aryl, Benzyl, oder Acyl,
R⁴² = Wasserstoff oder C₁- bis C₅-Alkyl.

7. Epoxidharz-Zusammensetzung nach Anspruch 6, **dadurch gekennzeichnet, dass** die Epoxidharz-Zusammensetzung bezogen auf 100 Gewichtsteile Epoxidharz
a) 1 bis 15 Gewichtsteile Härter gemäß Formel (III), und
b) 0,05 bis 3,0 Gewichtsteile Boronsäure gemäß Formel (I),
umfasst.

8. Epoxidharz-Zusammensetzung nach einem der Ansprüche 6 bis 7, **dadurch gekennzeichnet, dass** das Gewichtsverhältnis Härter zu Boronsäure einem Verhältnis im Bereich 1 : 1 bis 300 : 1 entspricht.

9. Verwendung einer Epoxidharz-Zusammensetzung nach einem der Ansprüche 6 bis 8 zur Herstellung eines Faserverbundwerkstoffs, insbesondere einem Prepreg, oder Towpreg.

10. Verwendung einer Epoxidharz-Zusammensetzung nach Ansprüche 6 bis 8 zur Herstellung eines 1-Komponenten Klebstoffs oder Akustik-Dämmstoffs.

## Claims

1. Use of boronic acids of the general formula (I) for increasing the storage stability of epoxy resin compositions, comprising an epoxy resin and a curing agent for curing the epoxy resin, wherein formula (I) represents: 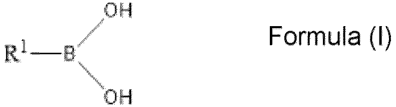
wherein radical R¹ means:
R¹ = alkyl, hydroxyalkyl or a radical of formula (II), wherein formula (II) is: 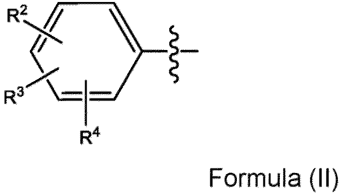
wherein R², R³, R⁴ independently of one another mean and at least one radical R², R³, R⁴ is not hydrogen:
R², R³, R⁴ = hydrogen, fluorine, chlorine, bromine, iodine, cyano, C₁ to C₅ alkyl, alkoxy, acyl, alkylsulfonyl, aryl, carboxyl, or B(OH)₂,
wherein the epoxy resin composition comprises, as a curing agent, a curing agent according to formula (III), wherein formula (III) is: 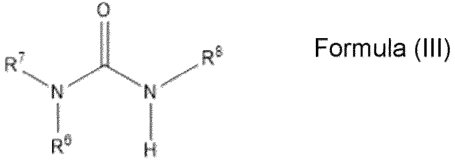
wherein R⁶, R⁷, R⁸ independently of one another mean:
R⁶, R⁷ = independently of one another hydrogen or C₁ to C₅ alkyl,
R⁸ = C₁ to C₁₅ alkyl substituted with -NHC(O)NR⁶R⁷, C₃ to C₁₅ cycloalkyl substituted with -NHC(O)NR⁶R⁷, aryl substituted with -NHC(O)NR⁶R⁷ or alkylaryl substituted with -NHC(O)NR⁶R⁷,
and wherein the epoxy resin composition does not comprise, in addition to the curing agent according to general formula (III), a curing agent selected from the group consisting of cyanamide, guanidines, cyanoguanidines, nitroguanidines, acylguanidines, biguanidines and a curing agent according to general formula (IV), wherein formula (IV) is as follows 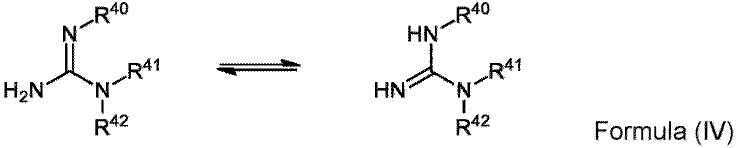
wherein radicals R⁴⁰, R⁴¹, R⁴² independentlyly of one another mean:
R⁴⁰ = cyano, nitro, acyl or a radical of the formula -(C=X)-R⁴³, with
X = imino or oxygen,
R⁴³ = amino, alkylamino or alkoxy,
R⁴¹ = hydrogen, C₁ to C₅ alkyl, aryl, benzyl, or acyl,
R⁴² = hydrogen or C₁ to C₅ alkyl.

2. Use according to claim 1, **characterized in that** radical R¹ in formula (I) means:
R¹ = methyl, ethyl, n-propyl, 1-methylethyl, n-butyl, 1-methylpropyl, 2-methylpropyl, n-pentyl, n-hexyl, n-heptyl, n-octyl, n-nonyl, n-decanyl, hydroxymethyl, 2-hydroxyethyl, 3-hydroxypropyl, 4-hydroxybutyl, or 5-hydroxypentyl.

3. Use according to claim 1, **characterized in that** R¹ in formula (I) is a radical of the formula (II), wherein radicals R², R³, R⁴ mean:
R² = fluorine, chlorine, bromine, iodine, cyano, C₁ - to C₅ -alkyl, alkoxy, acyl, alkylsulfonyl, aryl, carboxyl or B(OH)₂,
R³, R⁴ = hydrogen.

4. Use according to claim 1, **characterized in that** R¹ in formula (I) is a radical of the formula (II), wherein radicals R², R³, R⁴ independently of one another mean:
R², R³ = independently of one another fluorine, chlorine, bromine, iodine, cyano, C₁ to C₅ alkyl, alkoxy, acyl, alkylsulfonyl, aryl, carboxyl or B(OH)₂,
R⁴ = hydrogen.

5. Use according to claim 1, **characterized in that** R¹ in formula (I) is a radical of the formula (II), wherein radicals R², R³, R⁴ independently of one another mean:
R², R³, R⁴ = fluorine, chlorine, bromine, iodine, cyano, C₁ - to C₅ -alkyl, alkoxy, acyl, alkylsulfonyl, aryl, carboxyl or B(OH)₂.

6. Epoxy resin composition comprising at least one epoxy resin and a curing agent for curing the epoxy resin, **characterized in that** the composition comprises at least one boronic acids of the general formula (I), wherein formula (I) represents: 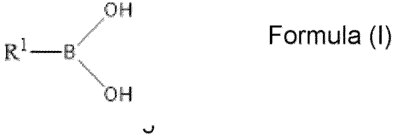
wherein radical R¹ means:
R¹ = alkyl, hydroxyalkyl or a radical of formula (II), wherein formula (II) is: 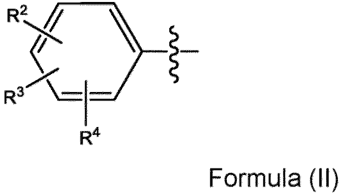
wherein R², R³, R⁴ independently of one another mean and at least one radical R², R³, R⁴ is not hydrogen:
R², R³, R⁴ = hydrogen, fluorine, chlorine, bromine, iodine, cyano, C₁ to C₅ alkyl, alkoxy, acyl, alkylsulfonyl, aryl, carboxyl, or B(OH)₂,
wherein the epoxy resin composition comprises, as a curing agent, a curing agent according to formula (III), wherein formula (III) is: 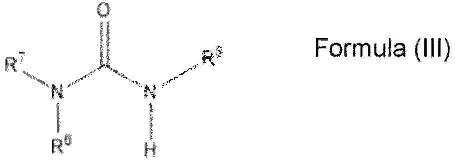
wherein R⁶, R⁷, R⁸ independently of one another mean:
R⁶, R⁷ = independently of one another hydrogen or C₁ to C₅ alkyl,
R⁸ = C₁ to C₁₅ alkyl substituted with -NHC(O)NR⁶R⁷, C₃ to C₁₅ cycloalkyl substituted with -NHC(O)NR⁶R⁷, aryl substituted with -NHC(O)NR⁶R⁷ or alkylaryl substituted with -NHC(O)NR⁶R⁷,
and wherein the epoxy resin composition does not comprise, in addition to the curing agent according to general formula (III), a curing agent selected from the group consisting of cyanamide, guanidines, cyanoguanidines, nitroguanidines, acylguanidines, biguanidines and a curing agent according to general formula (IV), wherein formula (IV) is as follows 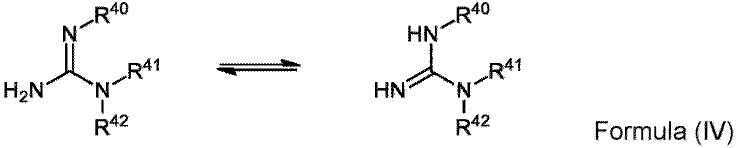
wherein radicals R⁴⁰, R⁴¹, R⁴² independentlyly of one another mean:
R⁴⁰ = cyano, nitro, acyl or a radical of the formula -(C=X)-R⁴³, with
X = imino or oxygen,
R⁴³ = amino, alkylamino or alkoxy,
R⁴¹ = hydrogen, C₁ to C₅ alkyl, aryl, benzyl, or acyl,
R⁴² = hydrogen or C₁ to C₅ alkyl.

7. Epoxy resin composition according to claim 6, **characterized in that** the epoxy resin composition based on 100 parts by weight of epoxy resin comprises
a) 1 to 15 parts by weight of curing agent according to formula (III), and
b) 0.05 to 3.0 parts by weight of boronic acid according to formula (I).

8. Epoxy resin composition according to any one of claims 6 to 7, **characterized in that** the weight ratio of curing agent to boronic acid corresponds to a ratio in the range 1 : 1 to 300 : 1.

9. Use of an epoxy resin composition according to any one of claims 6 to 8 for the manufacture of a fiber composite, in particular a prepreg, or towpreg.

10. Use of an epoxy resin composition according to claims 6 to 8 for the manufacture of a 1-component adhesive or acoustic insulating material.

## Revendications

1. Utilisation d'acides boroniques de formule générale (I) pour augmenter la stabilité au stockage de compositions de résine époxy comprenant une résine époxy et un durcisseur pour durcir la résine époxy, dans laquelle la formule (I) est : 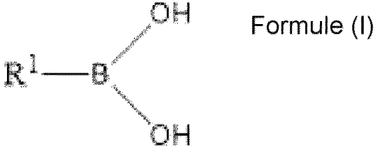
où le radical R¹ est :
R¹ = alkyle, hydroxyalkyle ou un radical de formule (II), la formule (II) étant : 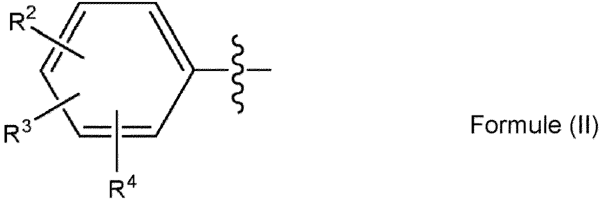
où R², R³, R⁴ sont, indépendamment les uns des autres, au moins un radical
R², R³, R⁴ étant différent de l'hydrogène :
R², R³, R⁴ = hydrogène, fluor, chlore, brome, iode, cyano, alkyle en C₁ à Cs, alcoxy, acyle, alkylsulfonyle, aryle, carboxyle ou B(OH)₂,
la composition de résine époxy comprenant, en tant que durcisseur, un durcisseur selon la formule (III), la formule (III) étant : 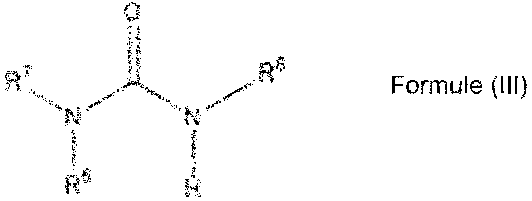
où R⁶, R⁷, R⁸ sont, indépendamment les uns des autres :
R⁶, R⁷ = indépendamment l'un de l'autre, hydrogène ou alkyle en C₁ à C₅,
R⁸ = alkyle en C₁ à C₁₅ substitué par -NHC(O)NR⁶R⁷, cycloalkyle en C₃ à C₁₅ substitué par -NHC(O)NR⁶R⁷, aryle substitué par -NHC(O)NR⁶R⁷ ou alkylaryle substitué par -NHC(O)NR⁶R⁷,
et la composition de résine époxy ne comprend, outre le durcisseur de formule générale (III), aucun durcisseur du groupe cyanamide, guanidines, cyanoguanidines, nitroguanidines, acylguanidines, biguanidines, et aucun durcisseur selon la formule générale (IV), la formule (IV) étant : 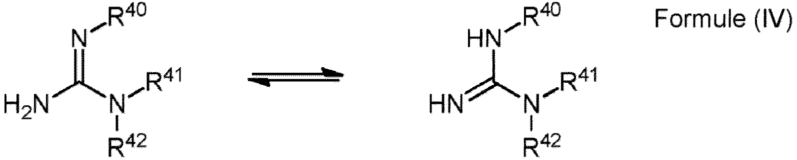
où les radicaux R⁴⁰, R⁴¹, R⁴² sont, indépendamment les uns des autres :
R⁴⁰ = cyano, nitro, acyle ou un radical de formule -(C=X)-R⁴³, avec
X = imino ou oxygène,
R⁴³ = amino, alkylamino ou alcoxy,
R⁴¹ = hydrogène, alkyle en C₁ à Cs, aryle, benzyle ou acyle,
R⁴² = hydrogène ou alkyle en C₁ à C₅.

2. Utilisation selon la revendication 1,
**caractérisée en ce que** le radical R¹ dans la formule (I) représente :
R¹ = méthyle, éthyle, n-propyle, 1-méthyléthyle, n-butyle, 1-méthylpropyle, 2-méthylpropyle, n-pentyle, n-hexyle, n-heptyle, n-octyle, n-nonyle, n-décanyle, hydroxyméthyle, 2-hydroxyéthyle, 3-hydroxypropyle, 4-hydroxybutyle ou 5-hydroxypentyle.

3. Utilisation selon la revendication 1,
**caractérisée en ce que** R¹ dans la formule (I) représente un radical de formule (II), les radicaux R², R³, R⁴ étant :
R² = fluor, chlore, brome, iode, cyano, alkyle en C₁ à Cs, alcoxy, acyle, alkylsulfinyle, aryle, carboxyle ou B(OH)₂,
R³, R⁴ = hydrogène.

4. Utilisation selon la revendication 1,
**caractérisée en ce que** R¹ dans la formule (I) représente un radical de formule (II), les radicaux R², R³, R⁴ étant, indépendamment les uns des autres :
R², R³ = indépendamment les uns des autres, fluor, chlore, brome, iode, cyano, alkyle en C₁ à Cs, alcoxy, acyle, alkylsulfonyle, aryle, carboxyle ou B(OH)₂,
R⁴ = hydrogène.

5. Utilisation selon la revendication 1,
**caractérisée en ce que** R¹ dans la formule (I) représente un radical de formule (II), les radicaux R², R³, R⁴ étant, indépendamment les uns des autres :
R², R³, R⁴ = fluor, chlore, brome, iode, cyano, alkyle en C₁ à Cs, alcoxy, acyle, alkylsulfonyle, aryle, carboxyle ou B(OH)₂.

6. Composition de résine époxy comprenant au moins une résine époxy et un durcisseur pour durcir la résine époxy,
**caractérisée en ce que** la composition comprend au moins un acide boronique de formule générale (I),
la formule (I) étant : 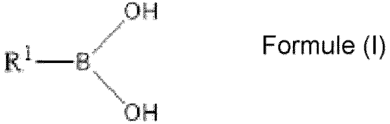
où le radical R¹ est :
R¹ = alkyle, hydroxyalkyle ou un radical de formule (II), la formule (II) étant : 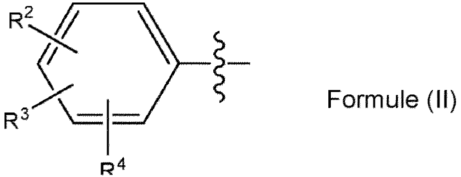
où R², R³, R⁴ sont, indépendamment les uns des autres, au moins un radical
R², R³, R⁴ étant différent de l'hydrogène :
R², R³, R⁴ = hydrogène, fluor, chlore, brome, iode, cyano, alkyle en C₁ à Cs, alcoxy, acyle, alkylsulfonyle, aryle, carboxyle ou B(OH)₂,
la composition de résine époxy comprenant comme durcisseur un durcisseur selon la formule (III), la formule (III) étant : 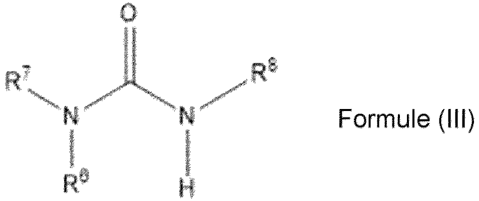
où R⁶, R⁷, R⁸ sont, indépendamment les uns des autres :
R⁶, R⁷ = indépendamment l'un de l'autre, hydrogène ou alkyle en C₁ à C₅,
R⁸ = alkyle en C₁ à C₁₅ substitué par -NHC(O)NR⁶R⁷, cycloalkyle en C₃ à C₁₅ substitué par -NHC(O)NR⁶R⁷, aryle substitué par -NHC(O)NR⁶R⁷ ou alkylaryle substitué par -NHC(O)NR⁶R⁷,
et la composition de résine époxy ne comprend, outre le durcisseur de formule générale (III), aucun durcisseur du groupe cyanamide, guanidines, cyanoguanidines, nitroguanidines, acylguanidines, biguanidines et aucun durcisseur selon la formule générale (IV), la formule (IV) étant : 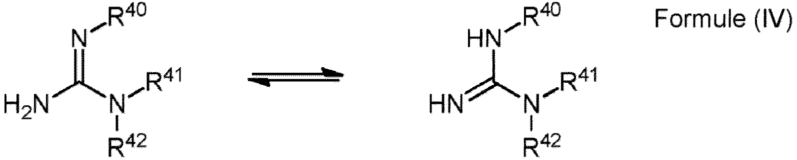
où les radicaux R⁴⁰, R⁴¹, R⁴² sont, indépendamment les uns des autres :
R⁴⁰ = cyano, nitro, acyle ou un radical de formule -(C=X)-R⁴³, avec
X = imino ou oxygène,
R⁴³ = amino, alkylamino ou alcoxy,
R⁴¹ = hydrogène, alkyle en C₁ à Cs, aryle, benzyle ou acyle,
R⁴² = hydrogène ou alkyle en C₁ à C₅.

7. Composition de résine époxy selon la revendication 6,
**caractérisée en ce que** la composition de résine époxy comprend, par rapport à 100 parties en poids de résine époxy,
a) 1 à 15 parties en poids de durcisseur selon la formule (III), et
b) 0,05 à 3,0 parties en poids d'acide boronique selon la formule (I).

8. Composition de résine époxy selon l'une des revendications 6 à 7,
**caractérisée en ce que** le rapport pondéral durcisseur/acide boronique correspond à un rapport compris entre 1 : 1 et 300 : 1.

9. Utilisation d'une composition de résine époxy selon l'une des revendications 6 à 8 pour la fabrication d'un matériau composite fibreux, en particulier un préimprégné, ou un towpreg.

10. Utilisation d'une composition de résine époxy selon les revendications 6 à 8 pour la fabrication d'un adhésif monocomposant ou d'un isolant acoustique.
